(19) Europäisches Patentamt
European Patent Office
Office européen des brevets

(11) **EP 4 318 096 A1**

(12) **EUROPEAN PATENT APPLICATION**
published in accordance with Art. 153(4) EPC

(43) Date of publication:
**07.02.2024 Bulletin 2024/06**

(21) Application number: **22781242.7**

(22) Date of filing: **31.03.2022**

(51) International Patent Classification (IPC):
***G02C 7/02*** *(2006.01)* ***G02B 1/10*** *(2015.01)*
***G02B 1/115*** *(2015.01)* ***G02B 1/14*** *(2015.01)*
***G02C 7/00*** *(2006.01)*

(52) Cooperative Patent Classification (CPC):
**G02B 1/10; G02B 1/115; G02B 1/14; G02C 7/00; G02C 7/02**

(86) International application number:
**PCT/JP2022/016560**

(87) International publication number:
**WO 2022/211032 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061630**

(71) Applicant: **Hoya Lens Thailand Ltd.**
**Pathumthani 12130 (TH)**

(72) Inventors:
- **NOZAWA, Kichinosuke**
  **Tokyo 1608347 (JP)**
- **KOJIMA, Kenji**
  **Tokyo 1608347 (JP)**
- **HOSHI, Yuji**
  **Tokyo 1608347 (JP)**

(74) Representative: **Kraus & Lederer Patentanwälte PartGmbB**
**Thomas-Wimmer-Ring 15**
**80539 München (DE)**

(54) **EYEGLASS LENS**

(57) Provided is an eyeglass lens excellent in antifogging properties and scratch resistance, the eyeglass lens including: a substrate having a first main surface and a second main surface; a water-absorbent antifogging layer that is composed of a single layer and is formed on a side of the second main surface of the substrate; a light transmissive hard layer formed on the first main surface of the substrate; and a hydrophilic antifogging layer formed on the light transmissive hard layer.

*FIG. 1*

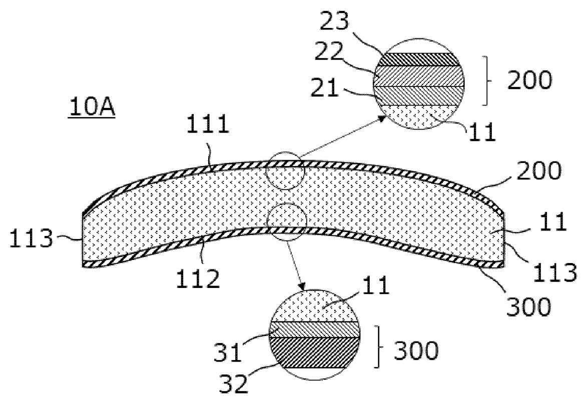


EP 4 318 096 A1

## Description

### Technical Field

The present disclosure relates to an eyeglass lens.

### Background Art

In order to prevent fogging of an eyeglass lens, it has been proposed to provide an antifogging layer on a lens substrate. For example, Patent Literature 1 describes that an antifogging layer including a water absorbing layer is provided in an eyeglass lens.

On the other hand, in consideration of long-time use of the eyeglass lens in various environments, there has been a demand for providing a highly durable antifogging layer capable of saving the trouble of periodically forming the antifogging layer again. For this reason, it is conceivable that an antifogging layer having both water absorbency and water repellency is formed by blending a water absorbing component and a lubricating component, thereby imparting scratch resistance and low friction resistance to the antifogging layer.

Examples of a method for forming such a water-absorbent antifogging layer on a substrate include a dip coating method. When the dip coating method is used, a substrate having a water-absorbent antifogging layer formed on both surfaces thereof can be relatively easily produced.

### Citation List

### Patent Literature

Patent Literature 1: WO 2013/005710 A

### Summary of Invention

### Technical Problem

Use of the dip coating method facilitates production of an eyeglass lens in which antifogging properties are imparted to both surfaces. On the other hand, the water-absorbent antifogging layer is disposed as the outermost layer on both surfaces of the substrate, and is often in contact with an object from the outside.

Generally, when the hydrophilic antifogging layer deteriorates or disappears, the antifogging properties of the hydrophilic antifogging layer are maintained by reapplying or partially reapplying for maintenance. On the other hand, as described above, the water-absorbent antifogging layer is imparted with durability by being formed by a method such as curing a coating film of a coating composition, and is used while being stayed on the substrate, unlike the hydrophilic antifogging layer.

For this reason, even if the water-absorbent antifogging layer has a certain level of scratch resistance, the water-absorbent antifogging layer is likely to be in contact with an object from the outside. As a result, the water-absorbent antifogging layer is damaged, and this state is continued disadvantageously.

Therefore, there is a demand for an eyeglass lens that has antifogging properties on both main surfaces and is capable of improving scratch resistance, as compared with a case where the outermost layers on both main surfaces are water-absorbent antifogging layers.

Therefore, an object of the present disclosure is to provide an eyeglass lens excellent in antifogging properties and scratch resistance.

### Solution to Problem

As a result of intensive studies to solve the above problems, the present inventors have found that the above problems can be solved by providing specific antifogging layers on two main surfaces of an eyeglass lens, and have completed the present disclosure.

That is, the present disclosure provides the following [1] to [11] .

[1] An eyeglass lens including:

- a substrate having a first main surface and a second main surface;
- a water-absorbent antifogging layer that is composed of a single layer and is formed on a side of the second

main surface of the substrate;
a light transmissive hard layer formed on the first main surface of the substrate; and
a hydrophilic antifogging layer formed on the light transmissive hard layer.

[2] The eyeglass lens according to [1], wherein the light transmissive hard layer is an antireflection layer.
[3] The eyeglass lens according to [1], wherein the light transmissive hard layer is a hard coat layer.
[4] The eyeglass lens according to [1], wherein the light transmissive hard layer includes an antireflection layer and a hard coat layer.
[5] The eyeglass lens according to any one of [1] to [4], wherein the first main surface is a convex surface.
[6] The eyeglass lens according to any one of [1] to [5], further including a hard coat layer formed on the second main surface of the substrate, wherein the water-absorbent antifogging layer is formed on the hard coat layer.
[7] The eyeglass lens according to any one of [1] to [5], wherein the water-absorbent antifogging layer is formed directly on the second main surface of the substrate.
[8] The eyeglass lens according to any one of [1] to [7], wherein the water-absorbent antifogging layer is formed of a cured film of a coating composition containing the following components (A) to (C):

Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

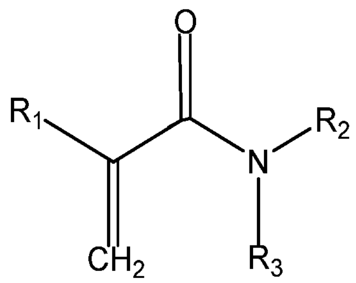

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 2]

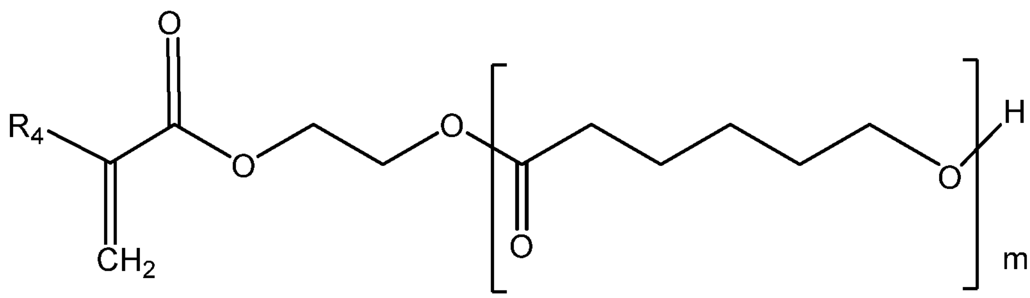

(2)

wherein $R_4$ is a hydrogen atom or a methyl group, and m is an integer of 1 to 5, and

[Chemical Formula 3]

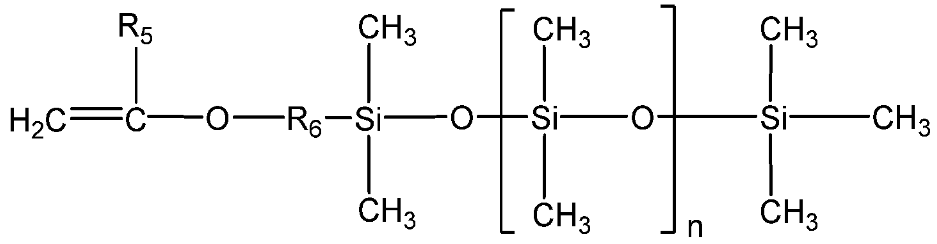

(3)

wherein $R_5$ is a hydrogen atom or a methyl group, $R_6$ is a divalent organic group, and n is 0 or an integer of 1 or more.

[9] The eyeglass lens according to any one of [1] to [8], wherein a thickness of the water-absorbent antifogging layer is larger than a thickness of the hydrophilic antifogging layer.

[10] The eyeglass lens according to any one of [1] to [9], wherein the hydrophilic antifogging layer contains one or more substances selected from the group consisting of a surfactant, a hydrophilic monomer, a polymer including a hydrophilic monomer, a silane coupling agent having a hydrophilic group, and a reactive surfactant having a reactive terminal group and a hydrophilic moiety.

[11] The eyeglass lens according to any one of [1] to [10], wherein the substrate is made of resin.

Advantageous Effects of Invention

According to the present disclosure, it is possible to provide an eyeglass lens excellent in antifogging properties and scratch resistance.

Brief Description of Drawings

Fig. 1 is a schematic cross-sectional view and a partially enlarged view of an eyeglass lens 10A.

Fig. 2 is a schematic cross-sectional view and a partially enlarged view of an eyeglass lens 10B.

Fig. 3 is a schematic cross-sectional view of eyeglass lenses 10A to 10D.

Description of Embodiments

Hereinafter, embodiments and examples of the present disclosure will be described. The same or corresponding parts are denoted by the same reference numerals, and the description thereof may not be repeated. In the embodiments and examples described below, when referring to the number, amount, and the like, the scope of the present disclosure is not necessarily limited to the number, amount, and the like unless otherwise specified. In the following embodiments, each component is not necessarily essential to the embodiments and examples of the present disclosure unless otherwise specified.

In the notation of the group (atomic group) in the present specification, the notation that does not indicate whether it is substituted or unsubstituted includes both groups having no substituent and groups having a substituent. For example, the "alkyl group" includes an alkyl group having no substituent (unsubstituted alkyl group) and an alkyl group having a substituent (substituted alkyl group).

The notation "(meth)acryl" in the present specification represents a concept including both acryl and methacryl. The same applies to similar notations such as "(meth)acrylate".

In the present specification, the constituent unit derived from the monomer (a-1) may be referred to as a "constituent unit (a-1)", the constituent unit derived from the monomer (a-2) as a "constituent unit (a-2)", the constituent unit derived from the monomer (a-3) as a "constituent unit (a-3)", and the constituent unit derived from the monomer (a-4) as a "constituent unit (a-4)".

[Eyeglass lens]

An eyeglass lens according to an embodiment of the present disclosure includes: a substrate having a first main surface and a second main surface; a water-absorbent antifogging layer that is composed of a single layer and is

formed on a side of the first main surface of the substrate; a light transmissive hard layer formed on the second main surface of the substrate; and a hydrophilic antifogging layer formed on the light transmissive hard layer.

Fig. 1 is a schematic cross-sectional view and a partially enlarged view of the eyeglass lens 10A which is an example of an eyeglass lens. The configuration of the eyeglass lens 10A will be described with reference to Fig. 1. The eyeglass lens 10A includes a lens body. The lens body is constituted by a lens substrate 11 described later.

As illustrated in Fig. 1, the eyeglass lens 10A includes the eyeglass lens substrate 11 (hereinafter also simply referred to as "lens substrate") which is a substrate constituting the lens body. The lens substrate 11 has a first main surface 111, a second main surface 112, and an edge surface 113. A functional layer 200 including a hydrophilic antifogging layer is provided on the first main surface 111 of the lens substrate 11. A functional layer 300 including a water-absorbent antifogging layer is provided on the second main surface 112 of the lens substrate 11.

Both a hydrophilic antifogging layer 23 included in the functional layer 200 and a water-absorbent antifogging layer 32 included in the functional layer 300 are the outermost layers of the eyeglass lens 10A. The hydrophilic antifogging layer 23 and the water-absorbent antifogging layer 33 are exposed to the external space.

In the eyeglass lens 10A described above, the functional layer 200 having the hydrophilic antifogging layer 23 as the outermost layer, and a light transmissive hard layer including an antireflection layer 22 and a hard coat layer 21 is provided on the first main surface 111 as a convex surface, and the functional layer 300 including the water-absorbent antifogging layer 32 as the outermost layer and a hard coat layer 31 is disposed on the second main surface 112 as a concave surface.

Since the antifogging layers are respectively provided on the outermost layers of both main surfaces, the antifogging properties of the eyeglass lens are improved, and fogging of the eyeglass lens can be sufficiently suppressed in various applications.

In addition, the first main surface 111 of the eyeglass lens 10A is a convex surface, the first main surface 111 is easy to come into contact with an external object or the like as compared with the second main surface 112 which is a concave surface. However, by providing the functional layer having the hydrophilic antifogging layer and the light transmissive hard layer on the first main surface 111, the scratch resistance can be improved as compared with a case where the water-absorbent antifogging layer is provided on a main surface which is a convex surface.

On the other hand, the water-absorbent antifogging layer provided on the second main surface 112 which is a concave surface is an antifogging layer having water absorbency, such as a cured product of a coating composition described later. Therefore, when the water-absorbent antifogging layer is disposed as the outermost layer on the second main surface 112 which is a concave surface, certain scratch resistance is secured. When the water-absorbent antifogging layer is formed along the concave surface, contact with an external object is easily reduced.

As described above, the main surface on the side easily in contact with an external object (the main surface of the convex surface in the example of Fig. 1) is composed of a (thin) hydrophilic antifogging layer and a light transmissive hard layer, and the outermost layer of the main surface on the side hardly in contact with an external object (the main surface of the concave surface in the example of Fig. 1) is composed of a single water-absorbent antifogging layer. With such a configuration, it is possible to improve the scratch resistance of the entire eyeglass lens as compared with a case where the water-absorbent antifogging layers are provided as the outermost layers of both main surfaces while imparting antifogging properties to both main surfaces.

In the eyeglass lens 10A, the hydrophilic antifogging layer is generally thin, and a layer having high light transmittance can be used as the antireflection layer and the hard coat layer. Therefore, there is also an advantage that the transmittance is less likely to decrease as compared with a case where the water-absorbent antifogging layer is disposed on the main surfaces of both surfaces.

When the water-absorbent antifogging layer is disposed on both surfaces of the lens substrate, reflection is not sufficiently suppressed, and glare may be noticeable. However, by providing the antireflection layer on one main surface of the substrate, reflection is suppressed, to thereby suppress occurrence of the glare peculiar to both surfaces of the water-absorbent antifogging layer.

Fig. 2 is a schematic cross-sectional view and a partially enlarged view of the eyeglass lens 10B which is another example of the eyeglass lens.

As illustrated in Fig. 2, in the eyeglass lens 10B, the water-absorbent antifogging layer 32 is directly formed on the second main surface 112 of the substrate 11. This water-absorbent antifogging layer 32 composed of a single layer is a functional layer 301 and constitutes the outermost layer on the concave surface side.

In the eyeglass lens 10B, the hard coat layer is omitted from the main surface (the main surface of the concave surface in the example of Fig. 2) which is less likely to come into contact with an external object than the convex surface. The omitting of the hard coat layer provides an advantage that translucency is easily improved as compared with the eyeglass lens 10A illustrated in Fig. 1 while securing antifogging properties and scratch resistance.

Fig. 3 is a schematic cross-sectional view showing a configuration example of an eyeglass lens including still another example of the eyeglass lens.

Fig. 3(a) corresponds to the eyeglass lens 10A illustrated in Fig. 1, and has the following layer structure. Note

that "AR" means an antireflection layer, and "HC" means a hard coat layer.

[Hydrophilic antifogging layer /AR/HC/substrate/HC/water-absorbent antifogging layer]

Fig. 3(b) corresponds to the eyeglass lens 10B illustrated in Fig. 1, and has the following layer structure.

[Hydrophilic antifogging layer/AR/HC/substrate/water-absorbent antifogging layer]

Figs. 3(c) and 3(d) illustrate a configuration of still another example of the eyeglass lens.

An eyeglass lens 10C illustrated in Fig. 3(c) has a configuration in which the antireflection layer 22 is omitted from the eyeglass lens 10A of Fig. 3(a). That is, the eyeglass lens 10C has the following layer structure.

[Hydrophilic antifogging layer/HC/substrate/HC/water-absorbent antifogging layer]

An eyeglass lens 10D illustrated in Fig. 3(d) has a configuration in which the antireflection layer 22 is omitted from the eyeglass lens 10B of Fig. 3(b). That is, the eyeglass lens 10D has the following layer structure.

[Hydrophilic antifogging layer/HC/substrate/water-absorbent antifogging layer]

The layer structure is simplified by omitting the antireflection layer as in the eyeglass lenses 10C and 10D. Such a layer structure facilitates the production and more easily improves light transmittance while securing antifogging properties and scratch resistance.

In any of the eyeglass lenses 10A to 10D, the hydrophilic antifogging layer that can be formed thin and the light transmissive hard layer having high light transmittance are formed on one main surface instead of forming a relatively thick water-absorbent antifogging layer on one main surface. Whereby, a decrease in transmittance can be suppressed while securing antifogging properties on both main surfaces, as compared with a case where a relatively thick water-absorbent antifogging layer is disposed on both main surfaces, and the scratch resistance of the eyeglass lens as a whole can be improved.

In the eyeglass lenses 10A and 10B, in addition to the above matters, reflection is suppressed, and glare that occurs when the water-absorbent antifogging layer is provided on both main surfaces is easily suppressed.

In addition, a configuration reverse to the configurations of Figs. 3(a) to 3(d) may also be employable in which the functional layer having the hydrophilic antifogging layer as the outermost layer and the light transmissive hard layer is provided on the second main surface as a concave surface, and the functional layer including only the light transmissive hard layer and the water-absorbent antifogging layer, or the functional layer including only the water-absorbent antifogging layer is provided on the first main surface as a convex surface.

For example, when a user wearing a mask wears an eyeglass lens, the mask comes into contact with the concave surface of the eyeglass lens, or the concave surface is easily fogged by wearing the mask. As a result, it is assumed that when the concave surface is fogged, the user often wipes the concave surface with cloth or the like. In addition, in spectacles in which an inner lens can be mounted for the purpose of adjusting the diopter, reducing light or the like, it is conceivable that the inner lens, a member for mounting the inner lens, or the like interferes with the concave surface of the lens. As described above, depending on the application of the eyeglass lens, an external object often comes into contact with the concave surface rather than the convex surface. In such a case, by providing the functional layer including the hydrophilic antifogging layer and the light transmissive hard layer, which are more excellent in scratch resistance, on the concave surface side, scratch resistance of the entire eyeglass lens is easily secured.

<Lens substrate>

The lens substrate is, for example, an eyeglass lens substrate. The lens substrate is preferably made of resin. The lens substrate may be dyed with a colorant, or may be one obtained by mixing a colorant during formation of the substrate.

Examples of the resin constituting the lens substrate include a polycarbonate resin, a urethane urea resin, an acrylic allyl resin, a (thio)urethane resin, a polysulfide resin, a polyamide resin, and a polyester resin. The (thio)urethane resin means at least one selected from a thiourethane resin and a urethane resin. Among them, an acrylic allyl resin, a (thio)urethane resin, and a polysulfide resin are preferable.

In addition, the lens substrate used for the eyeglass lens of the present embodiment is preferably a plastic lens substrate having a refractive index of 1.50 or more, and more preferably a plastic lens substrate having a refractive index of 1.60 or more.

Preferable commercially available products of the plastic lens substrate include an allyl carbonate-based plastic

lens "HILUX 1.50" (manufactured by HOYA Corporation, refractive index 1.50), a thiourethane-based plastic lens "MERIA" (manufactured by HOYA Corporation, refractive index 1.60), a thiourethane-based plastic lens "EYAS" (manufactured by HOYA Corporation, refractive index 1.60), a thiourethane-based plastic lens "EYNOA" (manufactured by HOYA Corporation, refractive index 1.67), a polysulfide-based plastic lens "EYRY" (manufactured by HOYA Corporation, refractive index 1.70), and a polysulfide-based plastic lens "EYVIA" (manufactured by HOYA Corporation, refractive index 1.74).

The substrate may contain various additives such as an ultraviolet absorber, a polymerization catalyst, a release agent, a colorant, an antioxidant, a coloring inhibitor, and a fluorescent brightener, as other components. These additives can be contained in the substrate by being blended in a polymerizable composition used for preparing the substrate.

(Ultraviolet absorber)

The ultraviolet absorber preferably has a maximum absorption wavelength of 345 nm or more in a chloroform solution.

Examples of the ultraviolet absorber include a benzophenone-based compound, a benzotriazole-based compound, dibenzoylmethane, and 4-tert-butyl-4'-methoxybenzoylmethane.

Examples of the benzophenone-based compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone.

Examples of the benzotriazole-based compound include benzotriazole-based compounds such as 2-(2-hydroxy-5-methylphenyl)-2H-benzotriazole, 2-(2-hydroxy-3,5-di-tert-butylphenyl)-5-chloro-2H-benzotriazole, 2-(2-hydroxy-3-tert-butyl-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, and 2-(2-hydroxy-4-octyloxyphenyl)-2H-benzotriazole. These compounds may be used singly or in combination of two or more types thereof.

The addition amount of the ultraviolet absorber is preferably 0.01 parts by mass or more, more preferably 0.05 parts by mass or more, still more preferably 0.1 parts by mass or more, still more preferably 0.3 parts by mass or more, still more preferably 0.5 parts by mass or more, still more preferably 0.8 parts by mass or more, and preferably 5 parts by mass or less, more preferably 3 parts by mass or less, more preferably 2 parts by mass or less, still more preferably 1 part by mass or less with respect to 100 parts by mass of the total amount of the polythiol compound and the polyisocyanate compound.

(Polymerization catalyst)

The polymerization catalyst is preferably an organotin compound, and more preferably an alkyltin halide compound or an alkyltin compound.

Examples of the alkyltin halide compound include dibutyltin dichloride, dimethyltin dichloride, monomethyltin trichloride, trimethyltin chloride, tributyltin chloride, tributyltin fluoride, and dimethyltin dibromide.

Examples of the alkyltin compound include dibutyltin diacetate and dibutyltin dilaurate.

Among them, dibutyltin dichloride, dimethyltin dichloride, dibutyltin diacetate, and dibutyltin dilaurate are preferable.

The addition amount of the polymerization catalyst is preferably 0.001 parts by mass or more, more preferably 0.005 parts by mass or more, and preferably 1 part by mass or less, more preferably 0.5 parts by mass or less, still more preferably 0.1 parts by mass or less with respect to 100 parts by mass of the total amount of the polythiol compound and the polyisocyanate compound.

(Release agent)

Examples of the release agent include phosphoric acid ester compounds such as isopropyl acid phosphate, butyl acid phosphate, octyl acid phosphate, nonyl acid phosphate, decyl acid phosphate, isodecyl acid phosphate, isodecyl acid phosphate, tridecyl acid phosphate, stearyl acid phosphate, propyl phenyl acid phosphate, butyl phenyl acid phosphate, and butoxyethyl acid phosphate. The phosphoric acid ester compound may be either a phosphoric acid monoester compound or a phosphoric acid diester compound, but a mixture of a phosphoric acid monoester compound and a phosphoric acid diester compound is preferable.

The addition amount of the release agent is preferably 0.01 parts by mass or more, preferably 0.05 parts by mass or more, and preferably 1.00 parts by mass or less, preferably 0.50 parts by mass or less with respect to 100 parts by mass of the total amount of the polythiol compound and the polyisocyanate compound.

(Colorant)

The colorant for dyeing the lens substrate is used by being added to a solution for performing a dyeing treatment on the lens substrate.
Examples of the colorant for dyeing the substrate include dyes such as disperse dyes and oil-soluble dyes, and pigments. These dyes and pigments may be used singly or in combination of two or more kinds thereof.
When the substrate is colored in gray, a change in color due to yellowing is easily felt by human eyes. In such a case, the effect of suppressing yellowing by providing the antifogging layer is remarkable. Examples of the dye that colors the substrate in gray include an azo-based disperse dye and an anthraquinone-based disperse dye.
In addition, a colorant may be mixed with a raw material for forming the lens substrate to disperse the dye in the entire lens substrate.

(Size and optical properties of substrate, and the like)

The thickness and diameter of the substrate are not particularly limited. The thickness is usually about 1 to 30 mm, and the diameter is usually about 50 to 100 mm.
The refractive index ne of the substrate is preferably 1.50 or more, more preferably 1.53 or more, still more preferably 1.55 or more, still even more preferably 1.58 or more, still even more preferably 1.60 or more, particularly preferably 1.67 or more, and preferably 1.80 or less, more preferably 1.70 or less.
The lens substrate may be either a finish lens or a semi-finish lens.
The surface shape of the lens substrate is not particularly limited, and may be any of a flat surface, a convex surface, a concave surface, or the like.
The eyeglass lens of the present disclosure may be any of a single focal lens, a multifocal lens, a progressive addition lens, or the like. In a progressive addition lens, usually, a near vision region (near portion) and a progressive region (intermediate region) are included in a lower region described above, a distance vision region (distance portion) is included in an upper region.

<Hydrophilic antifogging layer>

The water-absorbent antifogging layer is located on the outermost layer of one main surface of the eyeglass lens. The hydrophilic antifogging layer is a layer made of a hydrophilic substance.
The hydrophilic substance can be used without particular limitation as long as it is a substance that forms a hydrophilic region. Examples of the hydrophilic substance include one or two or more hydrophilic substances selected from the group consisting of a surfactant, a hydrophilic monomer, a polymer including a hydrophilic monomer, a silane coupling agent having a hydrophilic group, and a reactive surfactant having a reactive terminal group and a hydrophilic moiety.
Examples of the surfactant include anionic surfactants such as fatty acid soaps and alkylbenzene sulfonates; cationic surfactants having a quaternary ammonium group; amphoteric surfactants such as long-chain alkyl amino acids; and nonionic surfactants such as polyoxyethylene nonylphenyl ether.
Examples of the hydrophilic monomer include hydrophilic monomers such as hydroxylalkyl (meth)acrylates, polyalkylene glycol mono(meth)acrylates, (meth)acrylamides, and N-vinyl lactams, (for example, glycosylethyl methacrylate, methacrylic acid, acrylic acid, 2-hydroxylethyl methacrylate, acrylamide, N,N-dimethylacrylamide, N-vinylpyrrolidone, N-(2-methacryloyloxyethyl)-2-pyrrolidone, glyceryl methacrylate, polyethylene glycol methacrylate, and polyethylene glycol acrylate).
Examples of the polymer including a hydrophilic monomer include polymers including the above hydrophilic monomers.
Examples of the reactive surfactant having a reactive terminal group and a hydrophilic moiety include silane coupling agents having an anionic hydrophilic group (for example, a sulfonic acid group); hydrophilic monomers; and reactive surfactants having a reactive terminal group such as a vinyl group, an acrylic group, a methacrylic group, a glycidyl group, an allyl group, an epoxy group, a mercapto group, a cyano group, an isocyano group or an amino group, and a hydrophilic moiety such as a sulfone group, a hydroxyl group or ammonium chloride.
The thickness of the hydrophilic antifogging layer is preferably 0.5 to 25 nm, more preferably 1 to 20 nm, and still more preferably 5 to 15 nm from the viewpoint of ease of application.

<Water-absorbent antifogging layer>

The water-absorbent antifogging layer is a layer having water absorbency. Here, the term "water absorbency" means that the material exhibits a property of taking moisture therein. The term "water absorbency" specifically means

that when a transparent substrate on which the antifogging layer is formed is stored at room temperature, and then the transparent substrate provided with the antifogging layer is placed at a position 35 mm away from the surface of hot water at 40°C, and exposed to vapor from the hot water for 15 seconds, there is no irregular reflection on the surface of the antifogging layer due to small water droplets, and there is no distortion due to condensation on an image viewed through the transparent substrate provided with the antifogging layer after the vapor is brought into contact with the transparent substrate.

From the viewpoint of sufficiently exhibiting antifogging properties, the water-absorbent antifogging layer is provided as the outermost layer which is one main surface of the eyeglass lens opposite to the main surface on the side where the hydrophilic antifogging layer is provided.

The water-absorbent antifogging layer preferably has water repellent performance. Accordingly, the antifogging performance is further improved.

The water-absorbent antifogging layer is a single layer made of a resin material having water absorbency, and is preferably a single layer having a contact angle with water of 85° to 120°.

When the water-absorbent antifogging layer has the above-described properties, it is easy to impart properties such as scratch resistance, low friction resistance, and solvent resistance in addition to having water absorbency. As a result, the water-absorbent antifogging layer exhibits high durability even when located in the outermost layer of the eyeglass lens.

Here, the contact angle of the water-absorbent antifogging layer with water is represented by an angle formed between a water droplet and the surface of the antifogging layer 30 seconds after 20 μl of pure water droplet is dropped onto the surface of the flat antifogging layer to be measured and brought into contact with the surface at 20°C.

(Thickness of water-absorbent antifogging layer)

The thickness of the water-absorbent antifogging layer is preferably 1 to 100 μm, more preferably 3 to 60 μm, still more preferably 6 to 50 um, still even more preferably 8 to 40 um, still even more preferably 8 to 40 μm, and still even more preferably 12 to 30 um from the viewpoint of ease of production.

The thickness of the water-absorbent antifogging layer is preferably 1 um or more, more preferably 3 um or more, still more preferably 6 um or more, still even more preferably 8 um or more, and still even more preferably 12 um or more from the viewpoint of improving antifogging properties. The thickness of the water-absorbent antifogging layer is preferably 100 um or less, more preferably 60 um or less, still more preferably 50 um or less, still even more preferably 40 um or less, and still even more preferably 30 um or less from the viewpoint of ease of production.

The thickness of the water-absorbent antifogging layer is preferably larger than the thickness of the hydrophilic antifogging layer described above from the viewpoint of securing sufficient water absorbency and antifogging properties.

(Coating composition)

The water-absorbent antifogging layer is preferably a cured film of a coating composition containing a constituent unit derived from a siloxane compound and a constituent unit derived from acrylamide.

When the water-absorbent antifogging layer has a constituent unit derived from a siloxane compound, the slipperiness of the water-absorbent antifogging layer is improved. As a result, the scratch resistance of the water-absorbent antifogging layer is improved. In addition, when the water-absorbent antifogging layer has an amide group derived from acrylamide, the hydrophilicity of the water-absorbent antifogging layer is increased. This improves water absorption performance, and as a result, improves antifogging properties.

The water-absorbent antifogging layer is preferably formed of a cured film of a coating composition containing the following components (A) to (C):

Component (A): a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 4]

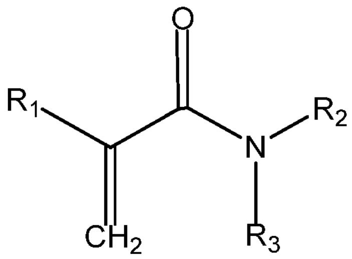

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 5]

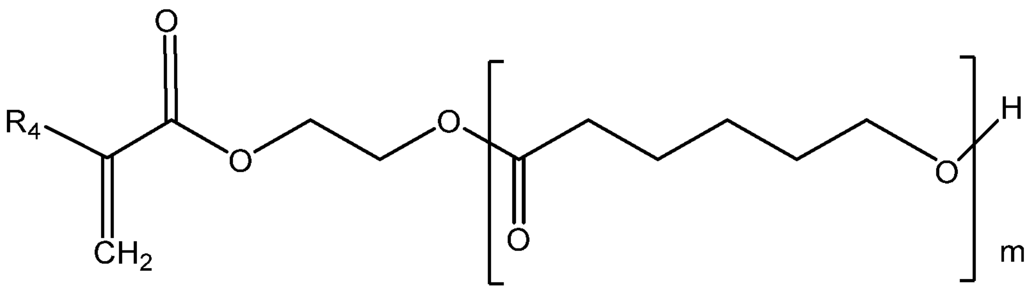

(2)

wherein $R_4$ is a hydrogen atom or a methyl group, and m is an integer of 1 to 5, and

[Chemical Formula 6]

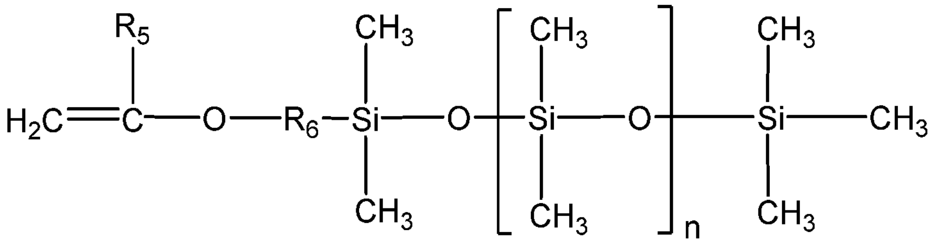

(3)

wherein $R_5$ is a hydrogen atom or a methyl group, $R_6$ is a divalent organic group, and n is 0 or an integer of 1 or more.

The constituent unit (a-1) contained in the resin (A) (also referred to as a (meth)acrylic resin) has an amide group, is highly hydrophilic, and easily retains moisture therein. It is therefore considered that moisture adhering to the surface of the water-absorbent antifogging layer obtained by curing the coating composition is easily absorbed into the cured film. In addition, it is considered that by blending the polyol compound (B), a gap for sufficiently absorbing moisture can be present while maintaining the crosslinking density required as a water-absorbent antifogging layer. For these reasons, it is considered that antifogging properties are imparted to the cured film of the coating composition.

The constituent unit (a-2) contained in the resin (A) is a constituent unit having a polycaprolactone structure, and contributes to improvement in flexibility and elasticity of the water-absorbent antifogging layer due to its flexible chemical skeleton. In addition, by containing the constituent unit (a-3) which is more rigid than the constituent unit (a-2), a balance between flexibility and elasticity is secured. On the other hand, the polydimethylsiloxane chain of the constituent unit (a-4) contributes to improvement in slipperiness with respect to the water-absorbent antifogging layer. Therefore, when an external force is applied to the water-absorbent antifogging layer, the above-described two effects of absorbing the external force by the flexibility and elasticity of the water-absorbent antifogging layer and releasing the external force to the outside of the water-absorbent antifogging layer by the slipperiness are synergistically exhibited. As a result, it is considered that the water-absorbent antifogging layer is less likely to be scratched.

In the coating composition, preferably, the proportion of the constituent unit derived from the monomer (a-1) is 20 mass% or more and 65 mass% or less, the proportion of the constituent unit derived from the monomer (a-2) is 10

mass% or more and 40 mass% or less, and the proportion of the constituent unit derived from the monomer (a-4) is 1 mass% or more and 10 mass% or less, with respect to 100 mass% of all the constituent units constituting the component (A). In the coating composition, the ratio (NCO)/(OH) of the number (NCO) of isocyanate groups contained in the component (C) to the total amount (OH) obtained by adding the number of hydroxyl groups contained in the component (A) and the number of hydroxyl groups contained in the component (B) is preferably 0.15 or more and 0.55 or less.

It is considered that when the composition of the coating composition is as described above, the equivalent ratio (NCO/OH) is set to a specific range smaller than 1 while maintaining the balance (amount ratio) between the constituent unit (a-2) and the constituent unit (a-3) having a hydroxyl group in the component (A), so that the hardness of the water-absorbent antifogging layer can be increased to an extent that the friction resistance is improved. In addition, it is considered that the equivalent ratio (NCO/OH) is set to a specific range smaller than 1 while maintaining the structural balance between the constituent unit (a-2) and the constituent unit (a-3) having a hydroxyl group in the component (A), so that the crosslinking density of the water-absorbent antifogging layer is increased, and the solvent resistance of the water-absorbent antifogging layer is improved.

The components contained in the coating composition of the present embodiment will be described below.

(Component (A): (meth)acrylic resin)

The coating composition of the present embodiment preferably contains a (meth)acrylic resin as the component (A), that is, a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3) .

As described above, it is considered that the constituent unit (a-1) is mainly involved in the absorption of water (moisture).

The (meth)acrylic resin can be typically obtained by polymerizing the monomer (a-1), the monomer (a-2), the monomer (a-3), and the monomer (a-4). Details of the polymerization method will be described later.

In the present embodiment, 100% of the constituent units constituting the (meth)acrylic resin need not be a constituent unit derived from a (meth)acrylic monomer. That is, the (meth)acrylic resin may partially (but not entirely) contain a constituent unit derived from a monomer other than a (meth)acrylic monomer.

In order to obtain the effect derived from the (meth)acrylic structure sufficiently, 50 mass% or more of all the constituent units of the (meth)acrylic resin is preferably a constituent unit derived from a (meth)acrylic monomer. More preferably, 80 mass% or more of all the constituent units of the (meth)acrylic resin is a constituent unit derived from a (meth)acrylic monomer. Still more preferably, all (100%) constituent units of the (meth)acrylic resin are a constituent unit derived from a (meth)acrylic monomer.

The monomer (a-1) is not particularly limited as long as the monomer has the structure of the general formula (1) described above. Specific examples thereof include (meth)acrylamide, N-methylacrylamide, N,N-dimethyl (meth)acrylamide, N-ethyl (meth)acrylamide, N,N-diethyl (meth)acrylamide, N-n-propyl (meth)acrylamide, and N-isopropyl (meth)acrylamide.

At least one kind of the monomer (a-1) may be used, and two or more kinds thereof may be used in combination. For example, a (meth)acrylic resin may be obtained by performing a polymerization reaction using two or more kinds of the monomers listed above.

The monomer (a-1) particularly preferably contains N,N-dimethyl (meth)acrylamide or N,N-diethyl (meth)acrylamide from the viewpoint of improving antifogging performance.

In the present embodiment, the content of the constituent unit derived from the monomer (a-1) in the (meth)acrylic resin is preferably 20 to 65 mass% with respect to the total amount of all the constituent units of the resin. The content is more preferably 35 to 60 mass%, and still more preferably 40 to 55 mass%. When the content of the constituent unit derived from the monomer (a-1) is 20 mass% or more, a water-absorbent antifogging layer exhibiting antifogging performance suitable for practical use is easily formed. When the content of the constituent unit derived from the monomer (a-1) is 65 mass% or less, the ratio of constituent units derived from other monomers is prevented from being relatively decreased, making it easy to maintain the balance of the entire composition.

The monomer (a-2) is not particularly limited as long as the monomer has the structure of the general formula (2) .

In the present embodiment, the (meth)acrylic resin contains the constituent unit derived from the monomer (a-2) in an amount of preferably 10 to 40 mass%, more preferably 20 to 38 mass%, and still more preferably 25 to 35 mass% with respect to the total amount of all the constituent units of the resin.

When the content of the constituent unit derived from the monomer (a-2) is 10 mass% or more, the flexibility of the water-absorbent antifogging layer is easily secured, and when the content is 40 mass% or less, the elasticity of the water-absorbent antifogging layer is easily secured.

The (meth)acrylic resin may contain a plurality of types of repeating units derived from the monomer (a-2).

The monomer (a-3) is a hydroxyalkyl (meth)acrylate. Specific examples of the hydroxyalkyl (meth)acrylate include hydroxyethyl (meth)acrylate, hydroxypropyl (meth)acrylate, and hydroxybutyl (meth)acrylate. In the present embodiment, among these, hydroxyethyl (meth)acrylate is preferable.

In the present embodiment, the content of the constituent unit derived from the monomer (a-3) in the (meth)acrylic resin is preferably 1 to 30 mass%, more preferably 2 to 20 mass%, and still more preferably 3 to 15 mass% with respect to the total amount of all the constituent units of the (meth)acrylic resin.

The monomer (a-3) has a hydroxyl group as with the monomer (a-2), and undergoes a crosslinking reaction with a polyfunctional isocyanate compound described later to form a water-absorbent antifogging layer.

In the present embodiment, the monomer (a-2) is subjected to a crosslinking reaction with a polyfunctional isocyanate compound together with the monomer (a-3) instead of subjecting only the monomer (a-2) to a crosslinking reaction to form a water-absorbent antifogging layer, thereby yielding a water-absorbent antifogging layer having various physical properties.

As described above, since the (meth)acrylic resin contains the constituent unit derived from the monomer (a-2) and the constituent unit derived from the monomer (a-3), the (meth)acrylic resin has a hydroxyl group as a whole, that is, has a hydroxyl value. Therefore, the (meth)acrylic resin can form a crosslinked structure by being reacted with a polyfunctional isocyanate compound described later together with a polyol compound described later.

The hydroxyl value of the (meth)acrylic resin is preferably 40 to 150 mgKOH/g, more preferably 70 to 140 mgKOH/g, and still more preferably 90 to 130 mgKOH/g.

Within this numerical range, the (meth)acrylic resin reacts with a polyfunctional isocyanate compound (described later) together with a polyol compound (described later), so that the crosslinked structure is easily controlled appropriately. Therefore, the water-absorbent antifogging layer can be hardened while maintaining the flexibility and elasticity of the water-absorbent antifogging layer. Therefore, it is easy to achieve a higher level of compatibility between the scratch resistance, reduction in friction resistance, and solvent resistance of the water-absorbent antifogging layer.

The hydroxyl value means the number of mg of potassium hydroxide required to neutralize acetic acid bonded to a hydroxyl group when 1 g of a sample is acetylated.

The monomer (a-4) is not particularly limited as long as the monomer has the structure of the general formula (3) .

The (meth)acrylic resin may contain a plurality of types of repeating units derived from the monomer (a-4). For example, a (meth)acrylic resin may be obtained by performing a polymerization reaction using two or more kinds of the monomers listed above.

In the present embodiment, the content of the constituent unit derived from the monomer (a-4) in the (meth)acrylic resin is preferably 1 to 10 mass%, more preferably 2 to 8 mass%, and still more preferably 3 to 7 mass% with respect to the total amount of all the constituent units of the resin.

When the content of the constituent unit derived from the monomer (a-4) is 1 mass% or more, a water-absorbent antifogging layer that satisfies scratch resistance is easily obtained. When the content is 10 mass% or less, a homogeneous (meth)acrylic resin is easily synthesized.

The (meth)acrylic resin may or may not include any constituent unit (constituent unit (a-5)) other than the constituent unit (a-1), the constituent unit (a-2), the constituent unit (a-3), and the constituent unit (a-4). Examples of the constituent unit (a-5) include constituent units derived from monomers represented below. By including such a constituent unit in the (meth)acrylic resin, the glass transition temperature of the (meth)acrylic resin and the physical properties (hardness, softness, and the like of the water-absorbent antifogging layer) of the water-absorbent antifogging layer can be adjusted and optimized.

Examples of the constituent unit (a-5) include constituent units derived from a monomer represented by the general formula CH2=CR-COO-R' where R is a hydrogen atom or a methyl group, and R' is an alkyl group, a monocyclic or polycyclic cycloalkyl group, an aryl group, or an aralkyl group.

Specific examples of the monomer include methyl (meth)acrylate, ethyl (meth)acrylate, n-butyl (meth)acrylate, isobutyl (meth)acrylate, tert-butyl (meth)acrylate, 2-ethylhexyl (meth)acrylate, isodecyl (meth)acrylate, n-lauryl (meth)acrylate, n-stearyl (meth)acrylate, phenyl (meth)acrylate, and benzyl (meth)acrylate.

Among them, a monomer in which R' is an alkyl group having 1 to 8 carbon atoms is preferable, a monomer in which R' is an alkyl group having 1 to 6 carbon atoms is more preferable, and a monomer in which R' is an alkyl group having 1 to 4 carbon atoms is still more preferable.

The (meth)acrylic resin may include a plurality of types of repeating units corresponding to the constituent unit (a-5). For example, a (meth)acrylic resin may be obtained by performing a polymerization reaction using two or more kinds of the monomers listed above as specific examples.

When the (meth)acrylic resin contains the constituent unit (a-5), the content thereof is preferably 1 to 40 mass%, more preferably 3 to 30 mass%, and still more preferably 5 to 20 mass% with respect to the total amount of all the constituent units of the (meth)acrylic resin.

The mass average molecular weight (Mw) of the (meth)acrylic resin is not particularly limited, but is preferably 10,000 to 100,000, more preferably 20,000 to 70,000, and still more preferably 30,000 to 60,000. When the mass average

molecular weight is 10,000 or more, it is easy to obtain desired antifogging performance, and when the mass average molecular weight is 100,000 or less, the coating composition tends to be excellent in coating suitability when applied to an object to be coated such as an eyeglass lens.

The mass average molecular weight can be determined by gel permeation chromatography (GPC) using polystyrene as a standard substance.

The glass transition temperature of the (meth)acrylic resin is not particularly limited, but is preferably 20 to 120°C, more preferably 30 to 110°C, and still more preferably 35 to 100°C.

The glass transition temperature of the (meth)acrylic resin can be determined by various methods, and can be determined, for example, based on the following Fox's equation.

$$1/Tg = (W_1/Tg_1) + (W_2/Tg_2) + (W_3/Tg_3) + ... + (W_n/Tg_n)$$

wherein Tg represents the glass transition temperature (K) of the (meth)acrylic resin, $W_1$, $W_2$, $W_3$ ... $W_n$ each represent the mass fraction of each monomer, $Tg_1$, $Tg_2$, $Tg_3$ ... $Tg_n$ each represent the glass transition temperature (K) of a homopolymer composed of a monomer corresponding to the mass fraction of each monomer.

In the present specification, the glass transition temperature of the (meth)acrylic resin (not the glass transition temperature of the water-absorbent antifogging layer, but the glass transition temperature of the (meth)acrylic resin alone) means a glass transition temperature determined based on the above equation. Note that the glass transition temperature of a monomer whose glass transition temperature is unknown, such as special monomers or polyfunctional monomers is determined using only a monomer whose glass transition temperature is known.

The (meth)acrylic resin can be typically obtained by a polymerization reaction. The polymerization reaction may be performed by various methods such as radical polymerization, cationic polymerization, and anionic polymerization, and among them, radical polymerization is preferable. The polymerization may be any of solution polymerization, suspension polymerization, emulsion polymerization, and the like. Among them, solution polymerization is preferable from the viewpoint of precise control of polymerization and the like.

As the polymerization initiator for radical polymerization, a known polymerization initiator can be used. Examples of the polymerization initiator include azo-based initiators such as azobisisobutyronitrile, 2,2-azobis(2-methylbutyronitrile), 2,2-azobis(2-methylpropionitrile), and 2,2-azobis(2,4-dimethylvaleronitrile); peroxide-based initiators such as benzoyl peroxide, t-butyl peroxyoctanoate, diisobutyl peroxide, di(2-ethylhexyl)peroxypivalate, decanoyl peroxide, t-butyl peroxy-2-ethylhexanoate, and t-butyl peroxybenzoate; and redox-based initiators combining an oxidizing agent and a reducing agent, such as hydrogen peroxide and an iron(II) salt, and a persulfate and sodium bisulfite. These may be used singly or in combination of two or more kinds thereof.

The blending amount of the polymerization initiator is not particularly limited, but is preferably 0.001 to 10 parts by mass based on 100 parts by mass of the total amount of the mixed liquid of monomers to be polymerized.

In the polymerization reaction, a known chain transfer agent, a polymerization inhibitor, a molecular weight modifier, or the like may be appropriately used. Further, the polymerization reaction may be performed in one stage or in two or more stages. The temperature of the polymerization reaction is not particularly limited, but is typically in a range of 50°C to 200°C, preferably 80°C to 150°C.

(Component (B): polyol compound)

The coating composition of the present embodiment preferably contains a polyol compound. When the coating composition contains the polyol compound, the polyol compound reacts with the polyfunctional isocyanate compound described later together with the (meth)acrylic resin, making it possible to form a water-absorbent antifogging layer having more excellent antifogging durability. The number of hydroxyl groups of the polyol compound in one molecule is 2 or more, preferably 2 to 6, and more preferably 2 to 4.

The polyol compound preferably contains at least one or more polyol compounds selected from the group consisting of a polycaprolactone polyol, a polycarbonate polyol, and a polyether polyol. The chemical structures of these polyol compounds are moderately flexible and elastic. Therefore, such polyol compounds can further improve the flexibility and elasticity of the cured film.

The polycaprolactone polyol can be used without particular limitation as long as it is a compound having a ring-opened structure of caprolactone and two or more hydroxyl groups in one molecule.

The polycarbonate polyol can be used without particular limitation as long as it is a compound having a carbonate group represented by -O-(C=O)-O- and two or more hydroxyl groups in one molecule. The polycarbonate polyol can be obtained by reacting one or more kinds of polyol raw materials (polyhydric alcohols) with a carbonate ester or phosgene.

The polyol raw material is not particularly limited, and examples thereof include aliphatic polyols, polyols having an alicyclic structure, and aromatic polyols. In the present embodiment, an aliphatic polyol having no alicyclic structure

is preferable from the viewpoint of the flexibility of the cured film.

Examples of the carbonate ester include aliphatic carbonate esters such as dimethyl carbonate and diethyl carbonate; aromatic carbonate esters such as diphenyl carbonate; and cyclic carbonate esters such as ethylene carbonate. Among them, an aliphatic carbonate ester is preferable, and dimethyl carbonate is particularly preferable from the viewpoint of availability and ease of production.

The polyether polyol can be used without particular limitation as long as it is a compound having an ether bond (-O-) and two or more hydroxyl groups in one molecule.

Specific examples of the compound include polyether polyols obtained by addition polymerization of an alkylene oxide such as ethylene oxide, propylene oxide, or butylene oxide, using, as an initiator, a compound having two or more, preferably two or three active hydrogen groups, such as a low molecular weight polyol such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, bisphenol A, bis(β-hydroxyethyl)benzene, xylylene glycol, glycerin, trimethylolpropane, and pentaerythritol; or a low molecular weight polyamine such as ethylenediamine, propylenediamine, toluenediamine, meta-phenylenediamine, diphenylmethanediamine, and xylylenediamine; and polyether polyols obtained by ring-opening polymerization of a cyclic ether monomer including an alkyl glycidyl ether such as methyl glycidyl ether, an aryl glycidyl ether such as phenyl glycidyl ether, and tetrahydrofuran.

In the present embodiment, the polyol compound may be a compound corresponding to a plurality of polycaprolactone polyols, polycarbonate polyols, and polyether polyols. The polyol compound may be, for example, a polyether polyester polyol having an ether bond and an ester bond.

The polyol compound may also contain a plurality of types of polycaprolactone polyols, polycarbonate polyols, and polyether polyols.

The hydroxyl value of the polyol compound is preferably 50 to 500 mgKOH/g, more preferably 100 to 350 mgKOH/g, and still more preferably 150 to 250 mgKOH/g. By setting the amount of the hydroxyl group to an appropriate amount, the crosslinked structure formed by the reaction with the polyfunctional isocyanate compound described below is controlled, thus making it easy to improve the flexibility, elasticity, and the like of the water-absorbent antifogging layer.

In the present embodiment, the mass average molecular weight (Mw) of the polyol compound is preferably 450 to 2,500, more preferably 500 to 1,500, and still more preferably 500 to 700. By setting the molecular weight to an appropriate value, it is possible to more easily achieve both suppression of the change in appearance of the water-absorbent antifogging layer due to improvement in flexibility and elasticity and durability of the water-absorbent antifogging layer such as gasoline resistance, at a higher level.

The content of the polyol compound in the coating composition is preferably 5 to 200 parts by mass, more preferably 15 to 180 parts by mass, still more preferably 20 to 150 parts by mass, still even more preferably 20 to 100 parts by mass, still even more preferably 20 to 50 parts by mass, and still even more preferably 20 to 40 parts by mass with respect to 100 parts by mass of the (meth)acrylic resin. Within this numerical range, the performance derived from the polyol compound is easily obtained, and the balance with other components is easily achieved.

In the present embodiment, the polyol compound preferably contains a polycaprolactone polyol among the polycaprolactone polyol, the polycarbonate polyol, and the polyether polyol described above, and particularly preferably contains a polycaprolactone diol (a compound having a caprolactone structure and two hydroxyl groups) among polycaprolactone polyols.

This is because there is a tendency that the polycaprolactone diol as the polyol compound tends to have good compatibility with the (meth)acrylic resin as the component (A), which has the structure of the general formula (2) described above, that is, the caprolactone structure, and also tends to improve antifogging performance without excessively increasing the crosslinking density.

(Component (C): polyfunctional isocyanate compound)

The coating composition of the present embodiment preferably contains a polyfunctional isocyanate compound as the component (C). When the coating composition contains the polyfunctional isocyanate compound, the hydroxyl groups of the constituent unit (a-2) and the constituent unit (a-3) contained in the (meth)acrylic resin as the component (A) and the hydroxyl group of the polyol compound as the component (B), and the polyfunctional isocyanate compound cause a crosslinking reaction, so that a water-absorbent antifogging layer having excellent antifogging durability is obtained.

The polyfunctional isocyanate compound is a compound having two or more isocyanate groups (including isocyanate groups protected by a leaving group) in one molecule. Preferably, the number of functional groups of the polyfunctional isocyanate compound is more preferably 2 to 6 per molecule, and still more preferably 2 to 4 per molecule.

Examples of the polyfunctional isocyanate compound include aliphatic diisocyanates such as lysine isocyanate, hexamethylene diisocyanate, and trimethylhexane diisocyanate; cyclic aliphatic diisocyanates such as hydrogenated

xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane; and tri- or higher functional isocyanates such as lysine triisocyanate.

As the polyfunctional isocyanate compound as the component (C), in addition to those described above, a multimer thereof such as a biuret type, an isocyanurate type, or an adduct type may be used. Among them, a biuret type polyfunctional isocyanate compound having moderate rigidity is preferable.

In the present embodiment, the content of the polyfunctional isocyanate compound in the coating composition is not particularly limited as long as it is blended according to the equivalent ratio (NCO)/(OH) described later. The content is usually 5 to 100 parts by mass, preferably 7 to 75 parts by mass, more preferably 10 to 60 parts by mass, still more preferably 10 to 50 parts by mass, still even more preferably 15 to 40 parts by mass, and still even more preferably 20 to 30 parts by mass with respect to 100 parts by mass of the (meth)acrylic resin. Within this numerical range, it is considered that necessary and sufficient crosslinking is performed in the water-absorbent antifogging layer.

The molar amount (that is, equivalent ratio (NCO)/(OH)) of the isocyanate groups (including a blocked isocyanate group) contained in the polyfunctional isocyanate compound to the hydroxyl groups contained in the (meth)acrylic resin and the polyol compound is preferably in a range of 0.15 to 0.55. When the equivalent ratio (NCO)/(OH) is within this range, the crosslinking density becomes sufficiently high, and as a result, functions such as antifogging properties and solvent resistance as a water-absorbent antifogging layer become sufficient.

From this viewpoint, the equivalent ratio (NCO)/(OH) is preferably 0.25 to 0.50 and more preferably 0.35 to 0.45.

(Form of coating composition)

The coating composition of the present embodiment may be a one-component type, that is, a state in which all components other than a solvent are substantially uniformly mixed (dissolved or dispersed) in the solvent. When the polyfunctional isocyanate compound is a blocked isocyanate, the one-component type is preferable.

As another aspect, the coating composition of the present embodiment may be a two-component type. By preparing the coating composition as a two-component type, the storage stability of the coating composition can be improved.

For example, the coating composition of the present embodiment may be composed of (1) a liquid A containing a (meth)acrylic resin and/or a polyol compound but not containing a polyfunctional isocyanate compound, and (2) a liquid B containing a polyfunctional isocyanate compound but not containing a (meth)acrylic resin and a polyol compound. The liquid A and the liquid B may be stored in separate containers, and the liquid A and the liquid B may be mixed immediately before use (application).

In this case, components (additives and the like) other than the (meth)acrylic resin, the polyol compound, and the polyfunctional isocyanate compound may be contained in the liquid A, contained in the liquid B, or prepared in another container.

In particular, when the polyfunctional isocyanate compound is not a blocked isocyanate (that is, when the isocyanate group is present in the form of -NCO in the system), the coating composition is preferably a two-component type.

(Solvent)

The coating composition of the present embodiment may also contain a solvent. The use of the solvent makes it easy to adjust the viscosity and the solid content of the coating composition.

Examples of the solvent include aromatic hydrocarbon solvents such as toluene and xylene; alcohol solvents such as methanol, ethanol, isopropyl alcohol, n-butanol, t-butanol, isobutanol, and diacetone alcohol; ketone solvents such as acetone, methyl ethyl ketone, methyl isobutyl ketone, and cyclohexanone; ester solvents such as ethyl acetate, propyl acetate, butyl acetate, and isobutyl acetate; and glycol ether solvents such as propylene glycol monomethyl acetate, propylene glycol monomethyl ether, and propylene glycol monomethyl ether acetate.

Among them, t-butanol, diacetone alcohol, methyl ethyl ketone, ethyl acetate, and propylene glycol monomethyl ether acetate are preferable from the viewpoint of low reactivity with isocyanate, solubility, drying property, and the like.

The content of the solvent in the coating composition is preferably 20 to 90 mass%, more preferably 30 to 85 mass%, and still more preferably 35 to 80 mass% from the viewpoint of controlling the film thickness of the water-absorbent antifogging layer.

The solid content of the coating composition is preferably 5 mass% or more, more preferably 10 mass% or more, and still more preferably 15 mass% or more from the viewpoint of obtaining an eyeglass lens having more excellent antifogging properties, and is preferably 50 mass% or less, more preferably 40 mass% or less, and still more preferably 30 mass% or less from the viewpoint of obtaining an eyeglass lens having excellent appearance.

The total content of the components (A), (B) and (C) in the solid content of the coating composition is preferably

60 mass% or more, more preferably 80 mass% or more, still more preferably 90 mass% or more, still even more preferably 95 mass% or more, and preferably 100 mass% or less, for example, 100 mass% from the viewpoint of improving antifogging properties and scratch resistance.

(Other additives)

The coating composition may contain additives such as a curing catalyst, an ultraviolet absorber, a light stabilizer, a surfactant, a leveling agent, and an antifoaming agent as necessary.
The content of the additive is, for example, preferably 0.001 to 5 mass%, more preferably 0.01 to 4 mass%, and still more preferably 0.1 to 3 mass% with respect to the total mass of the coating composition.
The coating composition can be prepared by dissolving or dispersing each component used as necessary in a solvent.
Each component can be dissolved or dispersed in the solvent simultaneously or sequentially in any order. A specific dissolution or dispersion method is not particularly limited, and a known method can be adopted without any limitation.

(Solid content concentration)

The solid content concentration of the coating composition is preferably 10.0 to 40.0 mass%. When the solid content concentration is 10.0 mass% or more, the film thickness of the water-absorbent antifogging layer can be increased. When the solid content concentration is 40.0 mass% or less, an antifogging layer having a uniform film thickness can be obtained. From this viewpoint, the solid content concentration of the coating composition is more preferably 12.0 to 30.0 mass%, still more preferably 15.0 to 30.0 mass%, and still even more preferably 16.5 to 24.5 mass%.

<Light transmissive hard layer>

The light transmissive hard layer is a layer made of a light transmissive hard material, and examples thereof include a hard coat layer and an antireflection layer.
The spectral transmittance of the light transmissive hard layer at a wavelength of 500 to 600 nm is preferably 70% or more, more preferably 80% or more, and still more preferably 90% or more.
The hardness of the light transmissive hard layer can be evaluated by, for example, indentation hardness (hardness). The indentation hardness referred to herein is a value obtained from a displacement-load curve from loading to unloading with a measurement indenter, and is specified in ISO 14577: 2000.
For example, an indentation depth h (nm) corresponding to an indentation load P (mgf) is continuously measured over the entire process from the start of loading to unloading at the measurement site using a nanoindentation tester (for example, a nanoindentation tester ENT-2100, manufactured by ELIONIX Inc.), and a P-h curve is created. An indentation hardness H can be determined from the created P-h curve by the following formula.

$$H(mgf/\mu m^2) = Pmax/A$$

(where Pmax: maximum load (mgf), A: projected area of the indenter ($\mu m^2$))
The indentation hardness measured as described above is hardness per unit area ($\mu m^2$) at a measurement site (measurement point) in the film thickness direction (depth direction).
The indentation hardness of the light transmissive hard layer is preferably, for example, in a range of 100 to 200 mgf/$\mu m^2$ from the viewpoint of scratch resistance. The indentation hardness can be adjusted by, for example, changing the type of the curable composition for a hard coat film, curing conditions, and film thickness.
When the light transmissive hard layer has the spectral transmittance and hardness described above, high light transmittance and scratch resistance can be imparted to the eyeglass lens. Such spectral transmittance and hardness can be imparted to the light transmissive hard layer by using a hard coat layer or an antireflection layer described below.

(Hard coat layer)

The hard coat layer formed on the lens substrate is provided to impart scratch resistance (abrasion resistance) to the eyeglass lens or to enhance durability (strength) of the eyeglass lens.
Examples of the material used for the hard coat layer include an acrylic resin, a melamine resin, a urethane resin, an epoxy resin, a polyvinyl acetal resin, an amino resin, a polyester resin, a polyamide resin, a vinyl alcohol resin, a styrene resin, a silicon resin, and a mixture or copolymer thereof.

An example of the hard coat layer is a silicon resin. The hard coat layer can be formed, for example, by applying and curing a coating composition containing metal oxide fine particles and a silane compound. The coating composition may contain components such as colloidal silica and a polyfunctional epoxy compound.

Specific examples of the metal oxide fine particles contained in this coating composition are fine particles made of a metal oxide such as $SiO_2$, $Al_2O_3$, $SnO_2$, $Sb_2O_5$, $Ta_2O_5$, $CeO_2$, $La_2O_3$, $Fe_2O_3$, $WO_3$, $ZrO_2$, $In_2O_3$, or $TiO_2$, or composite fine particles made of a metal oxide of two or more kinds of metals. A colloidal dispersion prepared by dispersing these fine particles in a dispersion medium (for example, water, an alcohol solvent or other organic solvents) can be mixed with the coating composition.

In this embodiment, silica and titania sol are used as the metal oxide, and these are solidified with the above-described resin to form the hard coat layer. The thickness of the hard coat layer is, for example, 1,000 to 3,000 nm.

A typical method for producing a hard coat layer is a method in which a coating composition is applied by a dip coating method, a spinner method, a spraying method, or a flow method, and then dried by heating at a temperature of 40 to 200°C for several hours.

(Antireflection layer)

The antireflection layer formed on the hard coat layer is an inorganic antireflection layer. The inorganic antireflection layer has a multilayer structure, and includes n + 1 low refractive index layers and n high refractive index layers (n is an integer of 2 or more). The low refractive index layer and the high refractive index layer are alternately built up. The low refractive index layer has, for example, a refractive index of 1.3 to 1.6, and the high refractive index layer has, for example, a refractive index of 1.8 to 2.6. In consideration of production cost and antireflective performance, n is often selected from 2, 3, and 4. That is, the antireflection layer includes a configuration of five layers in total, seven layers in total, and nine layers in total. In the present embodiment, the antireflection layer has a seven-layer structure (n = 3), includes four low refractive index layers and three high refractive index layers. The low refractive index layers and the high refractive index layers are alternately built up from the substrate side such that the outermost layer is the low refractive index layer.

Each of the plurality of low refractive index layers is, for example, a layer containing silicon oxide ($SiO_2$) as a main component. In addition, each of the plurality of high refractive index layers can be, for example, a layer containing zirconium oxide ($ZrO_2$) as a main component, a layer containing titanium oxide ($TiO_x$ ($0 < x \leq 2$)) as a main component, or a layer including both of these layers.

Each of these layers can be formed by vapor deposition using a vapor deposition source containing silicon oxide ($SiO_2$) as a main component, a vapor deposition source containing zirconium oxide ($ZrO_2$) as a main component, and a vapor deposition source containing titanium oxide ($TiO_x$) as a main component.

<Other layers>

The eyeglass lens may be provided with a layer other than the water-absorbent antifogging layer, the hydrophilic antifogging layer, and the light transmissive hard layer, and for example, may be provided with a primer layer.

The primer layer is provided between the lens substrate 1 and the hard coat layer 2 in order to ensure adhesion between the lens substrate and the hard coat layer. The primer layer is also effective in improving impact resistance.

Examples of the material used for the primer layer (resin for forming the base of the primer layer) include an acrylic resin, a melamine resin, a urethane resin, an epoxy resin, a polyvinyl acetal resin, an amino resin, a polyester resin, a polyamide resin, a vinyl alcohol resin, a styrene resin, a silicon resin, and a mixture or copolymer thereof. As the primer layer for imparting adhesion, a urethane resin and a polyester resin are suitable.

<Method for producing eyeglass lens>

One aspect of the method for producing a plastic eyeglass lens includes at least the following steps (1) to (3) :

- · Step (1): preparing a lens substrate containing a polymer of a polymerizable composition;
- · Step (2): forming a light transmissive hard layer on at least one main surface of the substrate;
- · Step (3): forming a water-absorbent antifogging layer as an outermost layer on one main surface of the substrate; and
- · Step (4): forming a hydrophilic antifogging layer as an outermost layer of the other main surface of the substrate.

Each of the steps will be described below.

(Step (1): preparation of lens substrate)

In step (1), a lens substrate containing a polymer of the polymerizable composition is prepared by polymerizing a polymerizable composition. Polymerization conditions for the polymerizable composition for an optical component can be appropriately set depending on the polymerizable composition.

The polymerization initiation temperature is preferably 0°C or higher, more preferably 10°C or higher, and preferably 50°C or lower, more preferably 40°C or lower. The temperature is raised from the polymerization initiation temperature, and then heating is preferably performed to perform curing formation. For example, the maximum temperature at heating is usually 110°C or higher and 130°C or lower.

After completion of the polymerization, the eyeglass lens may be released from a die and may be annealed. The temperature of the annealing treatment is preferably 100 to 150°C.

The polymerization method is not particularly limited, and various known polymerization methods can be adopted, but a cast polymerization method is preferable. The eyeglass lens is obtained, for example, by casting a polymerizable composition into a molding die combining glass or metal mold parts and a tape or gasket, and performing polymerization.

If necessary, a solution containing a colorant may be applied to the surface of the lens substrate to dye the lens substrate. In this case, it is preferable to dye the substrate by immersing the substrate in a solution containing a colorant.

In the dyeing treatment, dyeing can be promoted by immersing the substrate in a solution containing a colorant and heating for a predetermined time.

(Step (2-1): formation of first light transmissive hard layer)

A light transmissive hard layer is formed on at least one of the first main surface and the second main surface of the lens substrate.

A first light transmissive hard layer formed in this step has heat resistance enough to withstand heating when forming the water-absorbent antifogging layer described later, and corresponds to, for example, a hard coat layer.

Examples of the method for forming the hard coat layer include a method in which a curable composition is applied to the surface of the lens substrate by a dip coating method, a spin coating method, a roll coating method, or the like and the coating film is cured.

When the dip coating method is used, the curable composition can be simultaneously applied to two main surfaces of the lens substrate, so that the producing process can be easily simplified. The curing treatment is performed by heating, light irradiation, or the like, depending on the type of the curable composition.

When a water-absorbent antifogging layer is formed directly on the main surface of the substrate as in the eyeglass lens 10B illustrated in Fig. 3(b) and the eyeglass lens 10D illustrated in Fig. 3(d), it is not necessary to perform this step on the main surface. In this case, the first light transmissive hard layer such as a hard coat layer can also be formed by adopting a method capable of individually applying the curable composition to one main surface of the lens substrate, such as a spin coating method or a roll coating method.

(Step (3): formation of water-absorbent antifogging layer)

A water-absorbent antifogging layer is formed on one main surface of the substrate. More specifically, the water-absorbent antifogging layer is formed on the main surface on which the light transmissive hard layer is formed or the main surface on which the light transmissive hard layer is not formed.

The water-absorbent antifogging layer is formed by applying a coating composition (in the case of a two-component type, a mixture of two liquids) in which the respective components are dissolved or dispersed in a solvent onto the lens substrate, and drying and curing the coating film at a predetermined temperature.

The application method is not particularly limited, and examples thereof include an air spray method, an airless spray method, an electrostatic coating method, a roll coater method, a flow coater method, and a spin coating method.

After the application, the coating film is dried and cured preferably at 20 to 160°C for 10 to 120 minutes, more preferably at 60 to 120°C for 20 to 90 minutes, and further allowed to cool at normal temperature to obtain a cured film as an antifogging layer. The temperature and time for drying and curing may be appropriately adjusted in consideration of the type of solvent, the heat resistance of the lens substrate, and the like.

The curing may include a two-stage heating step of a pre-curing step and a main curing step.

The heating temperature in the pre-curing step is preferably 70 to 140°C, and more preferably 75 to 130°C or higher from the viewpoint of suppressing defective appearance, deformation, yellowing, and the like of the eyeglass lens. The heating time in the pre-curing step is preferably 3 to 60 minutes, more preferably 5 to 40 minutes, and still more preferably 10 to 30 minutes from the viewpoint of suppressing defective appearance and productivity.

The heating temperature in the main curing step is preferably 20 to 160°C, and more preferably 60 to 130°C

from the viewpoint of improving antifogging properties. The heating time in the main curing step is preferably 20 to 150 minutes, and more preferably 10 to 140 minutes from the viewpoint of improving antifogging properties. The heating temperature and the heating time in the heating step may be appropriately adjusted in consideration of the type of solvent, the heat resistance of the lens substrate, and the like.

The heating temperature in the main curing step is preferably higher than the heating temperature in the pre-curing step, and is preferably higher than the heating temperature in the pre-curing step by 5°C or more, and more preferably higher than the heating temperature in the pre-curing step by 10°C or more.

(Step (2-2): formation of second light transmissive hard layer)

This step is executed following step (3) as necessary, and is a step of forming a second light transmissive hard layer on the first light transmissive hard layer formed in step (1) on the main surface on the side where the water-absorbent antifogging layer is not provided, of the first main surface and the second main surface of the lens substrate.

Since the step of forming the water-absorbent antifogging layer includes a step of heating to a relatively high temperature, a light transmissive hard layer having relatively low heat resistance, such as the above-described antireflection layer is desirably formed after completion of step (3). By performing this step after completion of step (3), it is possible to avoid problems such as occurrence of cracks in the antireflection layer at the time of forming the water-absorbent antifogging layer.

When the second light transmissive hard layer is an antireflection layer, the antireflection layer is formed by repeatedly depositing a low refractive index layer and a high refractive index layer as many times as necessary. The vapor deposition for obtaining each layer constituting the antireflection layer includes a dry method, for example, a vacuum vapor deposition method, an ion plating method, a sputtering method, and the like. In the vacuum vapor deposition method, an ion beam assist method in which an ion beam is applied concurrently to vapor deposition may be used.

(Step (4): formation of hydrophilic antifogging layer)

In step (4), a hydrophilic antifogging layer is formed on the main surface of the substrate on the side opposite to the side where the water-absorbent antifogging layer is formed.

The hydrophilic antifogging layer is formed by applying the hydrophilic substance to the substrate or the functional layer formed on the substrate.

Examples of the method for applying the hydrophilic substance include a spin coating method and a spray coating method. However, an excellent antifogging performance can be obtained by a simple method including attaching an antifogging agent to the surface of the substrate and then wiping the substrate with a cloth, paper, or the like, or applying the antifogging agent with a cloth, paper, or the like impregnated with the antifogging agent.

Since it is sufficient that a thin layer of a hydrophilic substance can be formed on the surface of the light transmissive hard layer on the substrate, excess components generated at the time of application may be wiped off and removed.

The surface of the light transmissive hard layer may be subjected to plasma treatment before applying the hydrophilic substance from the viewpoint of improving adhesion. In this case, it is preferable to perform plasma treatment after masking the water-absorbent antifogging layer previously formed in step (3).

(Processing step)

After the respective layers are formed, or after any one of the respective layers is formed, processing such as cutting or grinding of the peripheral edge of the lens is performed as necessary. In this way, an eyeglass lens is produced.

Examples

Next, the present disclosure will be described in more detail by way of Examples, but the present disclosure is not limited in any way by these Examples.

The hydroxyl value, number average molecular weight (Mn), mass average molecular weight (Mw), and polydispersity index (Mw/Mn) of the components obtained in the following Examples were determined by the following methods. In addition, the thickness, spectral transmittance, and spectral reflectance of the antifogging layer of the eyeglass lenses obtained in Examples and Comparative Examples were measured, and the scratch resistance and the antifogging properties were evaluated by the following procedures.

(Hydroxyl value)

The hydroxyl value was measured and calculated according to the method specified in "7.1 Neutralization titration method" of JIS K 0070 "Test methods for acid value, saponification value, ester value, iodine value, hydroxyl value and unsaponifiable matter of chemical products".

The value of the acid value used for calculating the hydroxyl value was measured and calculated according to the method specified in "3.1 Neutralization titration method" of the JIS standard described above.

(Number average molecular weight (Mn), mass average molecular weight (Mw), polydispersity index (Mw/Mn))

The number average molecular weight, mass average molecular weight, and polydispersity index were measured and calculated by gel permeation chromatography (GPC). The apparatus, conditions, and the like used are as follows.

· Equipment used: HLC-8220GPC (manufactured by Tosoh Corporation)
Column used: TSKgel SuperHZM-M, TSKgel GMHXL-H, TSKgel G2500HXL, TSKgel G5000HXL (manufactured by Tosoh Corporation)
· Column temperature: 40°C
Standard substance: TSKgel standard polystyrene A1000, A2500, A5000, F1, F2, F4, F10 (manufactured by Tosoh Corporation)
· Detector: RI (refractive index) detector
· Eluent: tetrahydrofuran
· Flow rate: 1 ml/min

(Thickness of antifogging layer)

The thickness of the antifogging layer was measured using a non-contact film thickness measurement system FF8 manufactured by SystemRoad Co., Ltd.

(Spectral transmittance and spectral reflectance of eyeglass lens)

The spectral transmittance and the spectral reflectance of each of the eyeglass lenses obtained in Examples and Comparative Examples were measured using an ultraviolet-visible near-infrared spectrophotometer UH4150 manufactured by Hitachi High-Tech Science Corporation.

The luminous transmittance was calculated from the spectral transmittance, and the average reflectance of light with a wavelength of 380 nm to 780 nm was calculated from the spectral reflectance.

(Evaluation of scratch resistance)

The surface of the eyeglass lens obtained in each of Examples and Comparative Examples, on which the antifogging layer has been formed, was rubbed 20 times reciprocally while the surface of the eyeglass lens is pressed against steel wool (standard #0000, manufactured by Nippon Steel Wool Co., Ltd.) at 500 gf/$cm^2$ to scrub the lens surface, and the difficulty of scratching was visually determined. The criteria were as follows.

UA: There are almost no scratches.
A: There are several shallow scratches, or about two deep but fine scratches.
B: There are about 20 shallow scratches, or about 10 fine but deep scratches.
C: A large number of deep scratches (regardless of the width of the scratch) are generated and the state of the lens surface is close to fogging, or the scratches are shallow but the antifogging layer disappears.

(Evaluation of antifogging properties)

The eyeglass lens on which the antifogging layer has been formed was stored at room temperature. Then, the eyeglass lens was disposed at a position 35 mm away from the surface of hot water at 40°C. The antifogging layer was observed while the surface of the measurement target of the eyeglass lens was exposed to water vapor at 40°C. Then, the time from the start of exposure to water vapor until the area having a diameter of 50 mm from the lens center was fogged was measured, and the antifogging properties were evaluated according to the following criteria.

· S: Fogging does not occur even after 1 minute and 50 seconds.
· A: The time until the start of fogging is 1 minute and 50 seconds or more.
· B: The time until the start of fogging is from 30 seconds to less than 1 minute and 50 seconds.
· C: The time until the start of fogging is less than 30 seconds.
· D: Fogging occurs immediately.

[Example 1]

(1) Formation of hard coat layer

(1-1) Preparation of lens substrate

A thiourethane-based plastic lens "EYNOA" (manufactured by HOYA Corporation, refractive index: 1.67, S+0.00D, diameter: 75 mm, thickness: 1.8 mm) was immersed in a 10 mass% aqueous sodium hydroxide solution at 45°C for 5 minutes, and the resulting lens was sufficiently dried.

(1-2) Preparation of composition for hard coat

Into a glass container equipped with a magnetic stirrer, 17 parts by mass of γ-glycidoxypropyltrimethoxysilane, 30 parts by mass of methanol, and 28 parts by mass of water-dispersed colloidal silica (solid content: 40 mass%, average particle size: 15 μm) were charged and sufficiently mixed, and the mixture was stirred at a flow temperature of 5°C for 24 hours. Next, 15 parts by mass of propylene glycol monomethyl ether, 0.05 parts by mass of a silicone-based surfactant, and 1.5 parts by mass of aluminum acetylacetonate as a curing agent were added, and the mixture was sufficiently stirred and then filtered to prepare a composition for hard coat.

(1-3) Formation of hard coat layer

Next, the composition for hard coat was applied to both main surfaces of the lens substrate by a dip coating method. Then, the coated substrate was heated at 80°C for 20 minutes to perform pre-curing, and then heated at 110°C for 2 hours to perform main curing, thereby forming hard coat layers on two main surfaces of the substrate, respectively. The thickness of the hard coat layer on the convex surface side was 3.06 um at the central portion of the lens substrate. The thickness of the hard coat layer on the concave surface side was 2.86 um at the central portion of the lens substrate.

(2) Formation of water-absorbent antifogging layer

(2-1) Synthesis of (meth)acrylic resin

Into a 500 ml-flask equipped with a stirrer, a thermometer, a condenser, and a nitrogen gas inlet tube, 150 parts by mass of propylene glycol monomethyl acetate (PGMAC) was charged, and the temperature was raised to 110°C.

Separately, 25 parts by mass of dimethylacrylamide (DMAA), 35 parts by mass of polycaprolactone-modified hydroxyethyl acrylate (PLACCEL FA2D, manufactured by Daicel Corporation), 10 parts by mass of 2-hydroxylethyl methacrylate (HEMA), 5 parts by mass of polydimethylsiloxane modified with methacrylate at one terminal (Silaplane FM-0721, manufactured by JNC Corporation, molecular weight: 5,000), 25 parts by mass of methyl methacrylate, and 1 part by mass of 1,1'-azobis(cyclohexane-1-carbonitrile) (V-40, manufactured by Wako Pure Chemical Industries, Ltd.) were mixed. The mixed monomer was added dropwise to the 500 ml-flask over 2 hours with stirring, and reacted for 5 hours.

The heating was stopped and the mixture was cooled to room temperature to obtain a resin solution containing a (meth)acrylic resin (solid content ratio: about 40 mass%).

The obtained (meth)acrylic resin had a hydroxyl value of 57 mgKOH/g, a number average molecular weight (Mn) of 12,000, a mass average molecular weight (Mw) of 44,000, and a polydispersity index (Mw/Mn) of 3.67. The glass transition temperature (Tg) of the (meth)acrylic resin calculated from the blending ratio of the used monomers based on the above Fox's equation was 32.8°C.

(2-2) Preparation of coating composition

The (meth)acrylic resin obtained above (100 parts by mass), 30 parts by mass of polycaprolactone diol (PLACCEL 205U, manufactured by Daicel Corporation, molecular weight: 530, hydroxyl value: 207 to 217 mgKOH/g), and 23.5 parts by mass of a polyfunctional isocyanate compound (24A-100, manufactured by Asahi Kasei Corporation, biuret

type hexamethylene diisocyanate, isocyanate group content: 23.5 mass%, solid content: 100 mass%) were mixed. Then, the solid content concentration of the mixture was adjusted with PGMAC to prepare a coating composition having a solid content of 21.7 mass%.

The amount of the (meth)acrylic resin does not represent the amount as a resin solution (solid content ratio: about 40 mass%), but represents the amount of the resin (solid content) contained in the resin solution. The amount of the polyfunctional isocyanate compound also represents the amount as a solid content.

The measured value of the hydroxyl value of the mixture when the (meth)acrylic resin and the polyol compound were uniformly mixed in the above amounts was 93 mgKOH/g.

(2-3) Formation of water-absorbent antifogging layer

The lens substrate on which the hard coat layer has been formed was placed on a spin coater. The coating composition was supplied to the central portion of the hard coat layer of the main surface on the concave surface side of the lens substrate. The coating composition was spin-coated on the entire surface of the lens substrate under the following conditions.

<First stage>

· Treatment time: 4 seconds
· Rotation speed: 360 rpm
· Amount of coating composition used: 3.5 ml

<Second stage>

· Treatment time: 2 seconds
· Rotation speed: 1,050 rpm

Then, the coated substrate was heated at 100°C for 20 minutes to perform pre-curing, and then heated at 120°C for 120 minutes to perform main curing, thereby curing the coating film. Thus, a single water-absorbent antifogging layer was formed on the hard coat layer on the concave surface side of the substrate. The thickness of the water-absorbent antifogging layer near the central portion of the lens substrate was 12.7 μm.

(3) Formation of antireflection layer

An antireflection layer was formed on the hard coat layer on the convex surface side of the substrate by vacuum deposition. Specifically, a silicon oxide layer as a first base layer (low refractive index layer) was formed on the hard coat layer formed on the main surface as a convex surface of the substrate by a vacuum vapor deposition method. Then, a zirconium oxide layer and a silicon oxide layer were alternately built up as second to seventh layers on the base layer to form an antireflection layer.

(Preparation of antifogging agent for hydrophilic antifogging layer)

Sodium polyoxyethylene lauryl ether sulfate (5 g) as an anionic surfactant (NIKKOL SBL-4N, manufactured by Nikko Chemicals Co., Ltd.) was dissolved in 95 g of water to obtain an antifogging agent for a hydrophilic antifogging layer.

(4) Formation of hydrophilic antifogging layer

The hydrophilic substance containing an anionic surfactant was applied onto the antireflection layer on the convex surface side of the lens substrate using a spin coater, and this was heat-treated at 60°C for 2 hours to form a hydrophilic antifogging layer.

In this way, an eyeglass lens of Example 1 having a configuration corresponding to the eyeglass lens 10A illustrated in Figs. 1 and 3(a) was produced. In other words, an eyeglass lens having a configuration in which a hydrophilic antifogging layer, an antireflection layer, a hard coat layer, a lens substrate, a hard coat layer, and a water-absorbent antifogging layer were built up in this order from the convex surface (first main surface) side was produced.

[Example 2]

Using the plastic lens as a substrate, a composition for hard coat prepared in the same procedure as in Example 1 was applied onto the main surface on the concave surface side described in the lens by a spin coating method. Specifically, the lens substrate was placed on a spin coater, and the composition for hard coat was supplied to the central portion of the main surface on the concave surface side of the lens substrate. The composition for hard coat was spin-coated on the entire surface of the lens substrate under the following conditions.

<First stage>

· Treatment time: 4 seconds
· Rotation speed: 450 rpm
· Amount of coating composition used: 3 ml

<Second stage>

· Treatment time: 1 second
· Rotation speed: 1,050 rpm

Then, pre-curing and main curing were performed in the same procedure as in Example 1, thereby forming a hard coat layer on the main surface on the concave surface side of the lens substrate. The thickness of the hard coat layer near the central portion of the lens substrate was 3.1 um.
Next, a water-absorbent antifogging film was formed on the hard coat layer in the same procedure as in Example 1. The thickness of the water-absorbent antifogging layer near the central portion of the lens substrate was 12.8 um.
Next, an antireflection layer was formed on the main surface on the convex side of the lens substrate in the same procedure as in Example 1.
Further, a hydrophilic antifogging layer was formed on the antireflection layer in the same procedure as in Example 1.
In this way, an eyeglass lens having a configuration in which a hydrophilic antifogging layer, an antireflection layer, a lens substrate, a hard coat layer, and a water-absorbent antifogging layer were built up in this order from the convex surface (first main surface) side was produced.

[Example 3]

Using the plastic lens as a substrate, a hard coat layer was formed on each of two main surfaces of the lens substrate in the same procedure as in Example 1.
Next, a water-absorbent antifogging layer was formed on the hard coat layer on the concave surface side of the lens substrate in the same procedure as in Example 1.
Further, a hydrophilic antifogging layer was formed on the hard coat layer on the convex surface side of the lens substrate in the same procedure as in Example 1.
In this way, an eyeglass lens having a configuration in which a hydrophilic antifogging layer, a hard coat layer, a lens substrate, a hard coat layer, and a water-absorbent antifogging layer were built up in this order from the convex surface (first main surface) side was produced.

[Example 4]

Using the plastic lens as a substrate, a hard coat layer was formed on the main surface on the convex side of the lens substrate in the same procedure as in Example 2.
Next, a water-absorbent antifogging layer was formed on the main surface on the concave side of the lens substrate in the same procedure as in Example 1.
Further, an antireflection layer was formed on the hard coat layer in the same procedure as in Example 1.
Finally, a hydrophilic antifogging layer was formed on the antireflection layer in the same procedure as in Example 1.
In this way, an eyeglass lens having a configuration in which a hydrophilic antifogging layer, an antireflection

layer, a hard coat layer, a lens substrate, and a water-absorbent antifogging layer were built up in this order from the convex surface (first main surface) side was produced.

[Example 5]

Using the plastic lens as a substrate, a water-absorbent antifogging layer was formed on the main surface on the concave side of the lens substrate in the same procedure as in Example 1.

Next, an antireflection layer was formed on the main surface on the convex side of the lens substrate in the same procedure as in Example 1.

Further, a hydrophilic antifogging layer was formed on the antireflection layer in the same procedure as in Example 1.

In this way, an eyeglass lens having a configuration in which a hydrophilic antifogging layer, an antireflection layer, a lens substrate, and a water-absorbent antifogging layer were built up in this order from the convex surface (first main surface) side was produced.

[Example 6]

Using the plastic lens as a substrate, a composition for hard coat prepared in the same procedure as in Example 1 was applied onto the main surface on the convex surface side described in the lens by a spin coating method. Specifically, the lens substrate was placed on a spin coater, and the composition for hard coat was supplied to the central portion of the main surface on the convex surface side of the lens substrate. The composition for hard coat was spin-coated on the entire surface of the lens substrate under the following conditions.

<First stage>

· Treatment time: 4 seconds
· Rotation speed: 450 rpm
· Amount of coating composition used: 3 ml

<Second stage>

· Treatment time: 1 second
· Rotation speed: 1,050 rpm

Then, pre-curing and main curing were performed in the same procedure as in Example 1, thereby forming a hard coat layer on the main surface on the convex surface side of the lens substrate. The thickness of the hard coat layer near the central portion of the lens substrate was 3.0 um.

Next, a water-absorbent antifogging layer was formed on the main surface on the concave side of the lens substrate in the same procedure as in Example 1.

Further, a hydrophilic antifogging layer was formed on the hard coat layer in the same procedure as in Example 1.

In this way, an eyeglass lens having a configuration in which a hydrophilic antifogging layer, a hard coat layer, a lens substrate, and a water-absorbent antifogging layer were built up in this order from the convex surface (first main surface) side was produced.

[Comparative Example 1]

Using the plastic lens used as a substrate, the coating composition was applied onto the substrate by a dip coating method. Then, the coated substrate was heated at 100°C for 20 minutes to perform pre-curing, and then heated at 120°C for 120 minutes to perform main curing, thereby curing the coating film. Thus, a single water-absorbent antifogging layer was formed directly on each of the main surfaces of the substrate. The thickness of the water-absorbent antifogging layer on the convex surface side was 11.17 um, and the thickness of the water-absorbent antifogging layer on the concave surface side was 10.43 um.

In this way, an eyeglass lens having a configuration in which a water-absorbent antifogging layer, a lens substrate, and a water-absorbent antifogging layer were built up in this order from the convex surface (first main surface)

side was produced.

The results of measurement and evaluation of the eyeglass lenses of Examples 1 to 6 and Comparative Example 1 are shown in Table 1.

[Table 1]

Table 1

| Physical properties/ evaluation | Example 1 | Example 2 | Example 3 | Example 4 | Example 5 | Example 6 | Comparative Example 1 |
|---|---|---|---|---|---|---|---|
| Average reflectance (%) | 4.69 | 4.88 | 7.80 | 4.93 | 4.89 | 7.87 | 8.08 |
| Luminous transmittance (%) | 94.44 | 94.39 | 91.76 | 94.21 | 94.33 | 91.67 | 91.46 |
| Scratch resistance (convex surface/ concave surface) | UA/B | A/B | A/B | UA/B | A/B | A/B | B/B |
| Antifogging properties (convex surface/ concave surface) | S*/A | S*/A | S*/A | S*/A | S*/A | S*/A | A/A |
| *: The entire surface is wet in 50 seconds, but the surface is not fogged even after 1 minute and 50 seconds. | | | | | | | |

As is apparent from Table 1, it is found that the eyeglass lenses of Examples 1 to 6 have improved scratch resistance on the convex surface side while securing sufficient antifogging properties, as compared with the eyeglass lens of Comparative Example 1. In particular, the abrasion resistance of Examples 1 and 4 is remarkably improved. Therefore, the eyeglass lens is less likely to be scratched when dirt adhering to the convex surface is wiped off with fibers, or when the eyeglass lens is housed in a case, for example.

Table 1 also reveals that the average reflectance is decreased and the luminous transmittance is improved, as compared with the eyeglass lens of Comparative Example 1. In particular, in the eyeglass lenses of Examples 1, 2, 4, and 5, a decrease in average reflectance and an improvement in luminous reflectance are remarkable.

Finally, the embodiment of the present disclosure will be summarized.

The eyeglass lens according to the embodiment of the present disclosure includes: a substrate having a first main surface and a second main surface; a water-absorbent antifogging layer that is composed of a single layer and is formed on a side of the second main surface of the substrate; a light transmissive hard layer formed on the first main surface of the substrate; and a hydrophilic antifogging layer formed on the light transmissive hard layer.

According to the above-described embodiment, it is possible to provide an eyeglass lens excellent in antifogging properties and scratch resistance.

Each embodiment disclosed herein is an example in every respect and should not be restrictively understood. The scope of the present disclosure is defined not by the above description but by claims, and intends to include all modifications within meaning and a scope equal to claims.

In the present disclosure, as for the examples of components, contents, and physical properties, matters exemplified or described as a preferable range in the detailed description of the invention may be combined with each other arbitrarily.

In addition, by adjusting the composition described in Examples so as to be the composition described in the detailed description of the invention, the embodiment in the present disclosure can be performed in a similar manner to Examples in the entire claimed composition range.

Reference Signs List

10A, 10B, 10C, 10D Eyeglass lens
11 Substrate

21, 31 Hard coat layer
22 Antireflection layer
23 Hydrophilic antifogging layer
32 Water-absorbent antifogging layer
111 First main surface
112 Second main surface
113 Edge surface
200, 300, 301 Functional layer

## Claims

**1.** An eyeglass lens comprising:

a substrate having a first main surface and a second main surface;
a water-absorbent antifogging layer that is composed of a single layer and is formed on a side of the second main surface of the substrate;
a light transmissive hard layer formed on the first main surface of the substrate; and
a hydrophilic antifogging layer formed on the light transmissive hard layer.

**2.** The eyeglass lens according to claim 1, wherein the light transmissive hard layer is an antireflection layer.

**3.** The eyeglass lens according to claim 1, wherein the light transmissive hard layer is a hard coat layer.

**4.** The eyeglass lens according to claim 1, wherein the light transmissive hard layer includes an antireflection layer and a hard coat layer.

**5.** The eyeglass lens according to any one of claims 1 to 4, wherein the first main surface is a convex surface.

**6.** The eyeglass lens according to any one of claims 1 to 5, further comprising a hard coat layer formed on the second main surface of the substrate, wherein the water-absorbent antifogging layer is formed on the hard coat layer.

**7.** The eyeglass lens according to any one of claims 1 to 5, wherein the water-absorbent antifogging layer is formed directly on the second main surface of the substrate.

**8.** The eyeglass lens according to any one of claims 1 to 7, wherein the water-absorbent antifogging layer is formed of a cured film of a coating composition containing the following components (A) to (C):

Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3);
Component (B): a polyol compound (B); and
Component (C): a polyfunctional isocyanate compound (C),

[Chemical Formula 1]

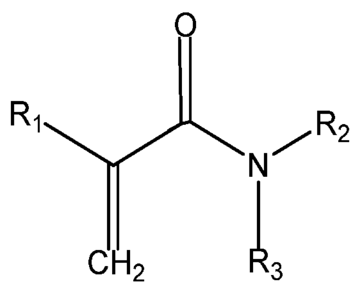

(1)

wherein $R_1$ is a hydrogen atom or a methyl group, and $R_2$ and $R_3$ are each independently a hydrogen atom or a linear or branched alkyl group having 1 to 3 carbon atoms,

[Chemical Formula 2]

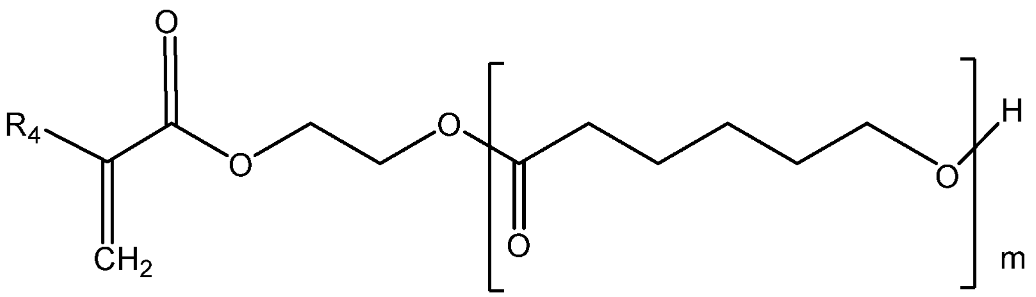

(2)

wherein $R_4$ is a hydrogen atom or a methyl group, and m is an integer of 1 to 5, and

[Chemical Formula 3]

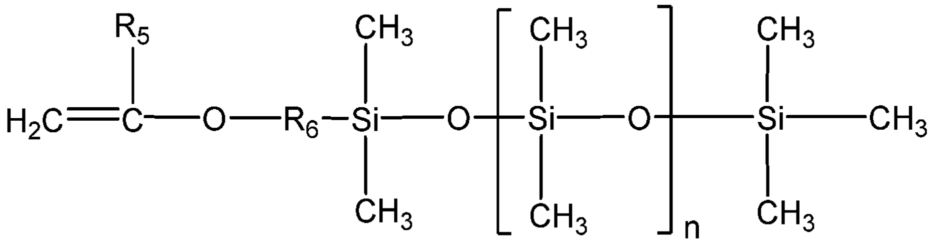

(3)

wherein $R_5$ is a hydrogen atom or a methyl group, $R_6$ is a divalent organic group, and n is 0 or an integer of 1 or more.

**9.** The eyeglass lens according to any one of claims 1 to 8, wherein a thickness of the water-absorbent antifogging layer is larger than a thickness of the hydrophilic antifogging layer.

**10.** The eyeglass lens according to any one of claims 1 to 9, wherein the hydrophilic antifogging layer contains one or more hydrophilic substances selected from the group consisting of a surfactant, a hydrophilic monomer, a polymer including a hydrophilic monomer, a silane coupling agent having a hydrophilic group, and a reactive surfactant having a reactive terminal group and a hydrophilic moiety.

**11.** The eyeglass lens according to any one of claims 1 to 10, wherein the substrate is made of resin.

FIG. 1

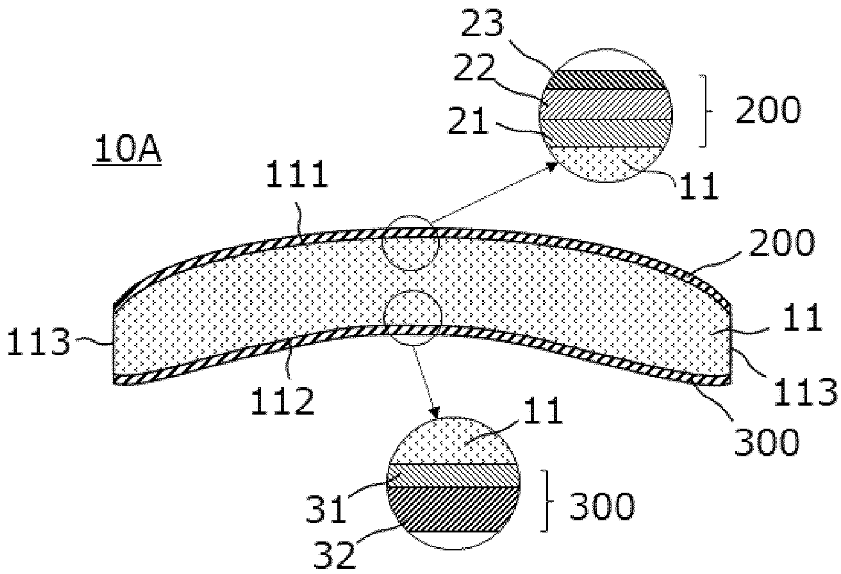
23
22
21
200
10A
111
11
200
113
11
113
112
300
11
31
300
32

FIG. 2

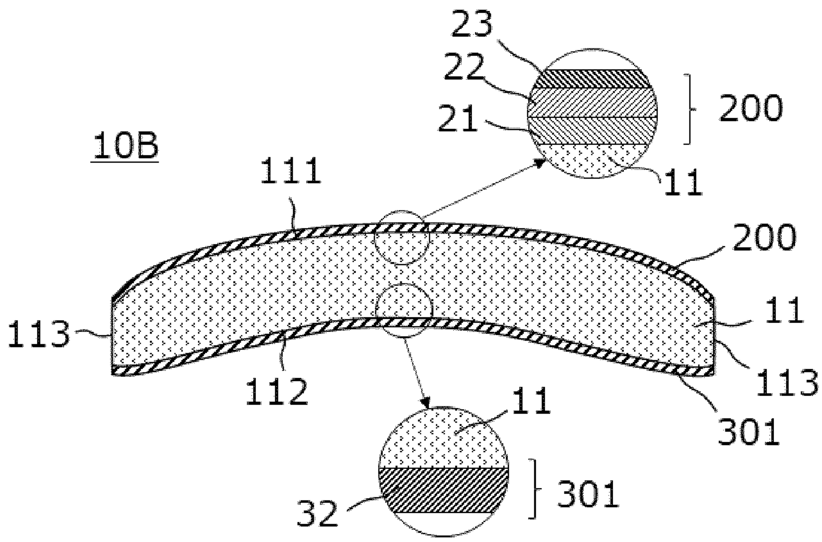
23
22
21
200
10B
111
11
200
113
11
113
112
301
11
301
32

FIG. 3

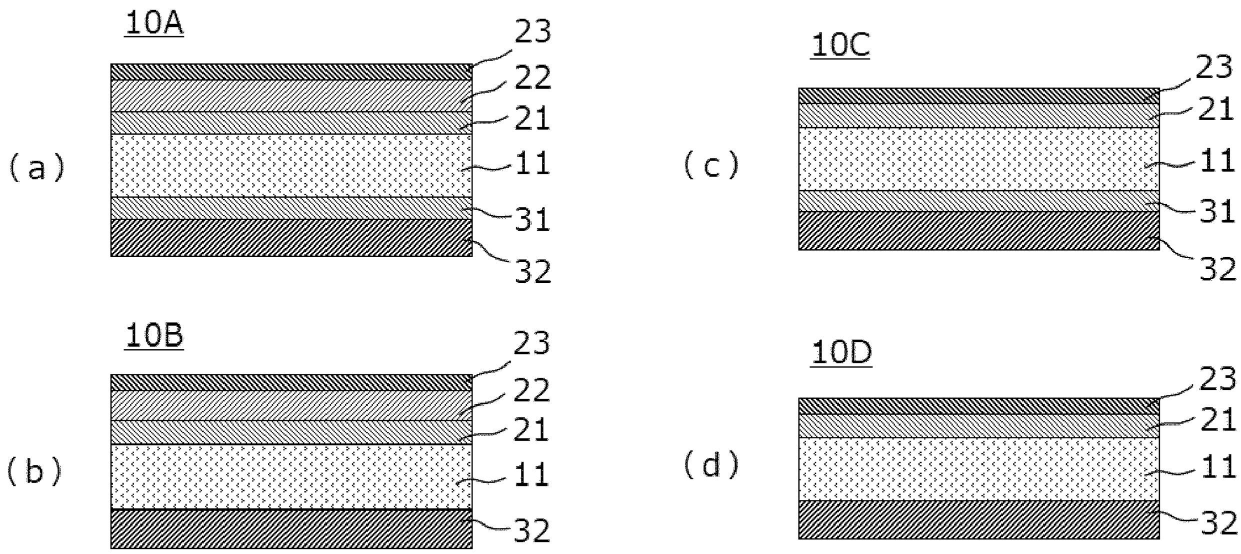
10A
23
22
21
(a)
11
31
32
10C
23
21
(c)
11
31
32
10B
23
22
21
(b)
11
32
10D
23
21
(d)
11
32

**INTERNATIONAL SEARCH REPORT**

International application No. **PCT/JP2022/016560**

**A. CLASSIFICATION OF SUBJECT MATTER**

***G02C 7/02***(2006.01)i; ***G02B 1/10***(2015.01)i; ***G02B 1/115***(2015.01)i; ***G02B 1/14***(2015.01)i; ***G02C 7/00***(2006.01)i
FI: G02C7/02; G02B1/10; G02B1/115; G02B1/14; G02C7/00

According to International Patent Classification (IPC) or to both national classification and IPC

**B. FIELDS SEARCHED**

Minimum documentation searched (classification system followed by classification symbols)

G02C7/02; G02B1/10; G02B1/115; G02B1/14; G02C7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-527780 A (RODENSTOCK GMBH) 30 July 2009 (2009-07-30) example 1, fig. 1, paragraphs [0008], [0019], [0020] | 1, 3, 5-7, 9-11<br>2, 4, 8 |
| X<br>Y | JP 2005-234066 A (ASAHI LITE OPTICAL CO., LTD.) 02 September 2005 (2005-09-02) claims, example 1, paragraph [0023] | 1, 3, 5-7, 9-11<br>1-11 |
| Y | Microfilm of the specification and drawings annexed to the request of Japanese Utility Model Application No. 056835/1975 (Laid-open No. 137342/1976) (NIHON HYDRON K.K.) 05 November 1976 (1976-11-05), example 1, fig. 1, 2, p. 1, line 1 to p. 3, line 20 | 1-11 |
| Y | JP 2005-266292 A (SEIKO EPSON CORP.) 29 September 2005 (2005-09-29) claims, example 1 | 1-11 |
| Y | Microfilm of the specification and drawings annexed to the request of Japanese Utility Model Application No. 38997/1990 (Laid-open No. 129901/1991) (MITSUBISHI RAYON CO.,LTD.) 26 December 1991 (1991-12-26), examples, fig. 3, p. 1, lines 1-10, p. 10, line 20 to p. 11, line 9 | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/016560

C. DOCUMENTS CONSIDERED TO BE RELEVANT

| Category* | Citation of document, with indication, where appropriate, of the relevant passages | Relevant to claim No. |
|---|---|---|
| Y | JP 2004-323794 A (PENTAX CORP.) 18 November 2004 (2004-11-18) example 2, fig. 2, paragraph [0015] | 2, 4 |
| Y | JP 2019-94468 A (NATOCO CO., LTD.) 20 June 2019 (2019-06-20) abstract, claims, paragraph [0087] | 8 |
| A | JP 6-289328 A (DAICEL ABOSHI SANGYO CO.,LTD.) 18 October 1994 (1994-10-18) entire text | 1-11 |
| A | JP 9-230109 A (DAICEL ABOSHI SANGYO CO.,LTD.) 05 September 1997 (1997-09-05) entire text | 1-11 |

Form PCT/ISA/210 (second sheet) (January 2015)

**INTERNATIONAL SEARCH REPORT**
**Information on patent family members**

International application No.
**PCT/JP2022/016560**

| Patent document cited in search report | Publication date (day/month/year) | Patent family member(s) | Publication date (day/month/year) |
|---|---|---|---|
| JP 2009-527780 A | 30 July 2009 | US 2009/0053465 A1<br>example 1, fig. 1, paragraphs [0011], [0020], [0021]<br>WO 2007/098843 A1<br>DE 102006008784 A1 | |
| JP 2005-234066 A | 02 September 2005 | (Family: none) | |
| JP 51-137342 U1 | 05 November 1976 | (Family: none) | |
| JP 2005-266292 A | 29 September 2005 | (Family: none) | |
| JP 3-129901 U1 | 26 December 1991 | (Family: none) | |
| JP 2004-323794 A | 18 November 2004 | (Family: none) | |
| JP 2019-94468 A | 20 June 2019 | JP 6340539 B1 | |
| JP 6-289328 A | 18 October 1994 | (Family: none) | |
| JP 9-230109 A | 05 September 1997 | US 5989628 A<br>US 5985420 A<br>TW 293091 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013005710 A